# EUROPEAN PATENT APPLICATION

(11) **EP 4 703 269 A1**
(43) Date of publication of application: **04.03.2026**
(21) Application number: 24796644.3
(22) Date of filing: 20.03.2024
(51) Int. Cl.: B64D 27/357, B64D 33/08, B64U 20/98, H01M 10/613, H01M 10/625, H01M 10/653, H01M 10/659

(54) **COOLING DEVICE AND COOLING SYSTEM**

(30) Priority: 24.04.2023 JP 2023071012
(71) Applicant: DENSO CORPORATION, Kariya-city, Aichi 448-8661 (JP)
(72) Inventor: NAKAMURA, Masaya, Kariya- city Aichi 4488661 (JP); KOHARA, Kimio, Kariya- city Aichi 4488661 (JP); YOSHIDA, Shuhei, Kariya- city Aichi 4488661 (JP)
(74) Representative: TBK
(86) International application number: PCT/JP2024/010880
(87) International publication number: WO 2024/224886

(57) **Abstract**

A cooling device is mounted on an electric flying object, and cools a battery of the electric flying object. The cooling device includes a heat storage material of one or more types. The heat storage material, as a latent heat storage material (1711), includes a first latent heat storage material (1711A) in which a phase transition temperature is set to absorb heat generated by the battery associated with takeoff from among (i) the heat generated by the battery associated with takeoff and (ii) heat generated by the battery associated with landing, and/or a second latent heat storage material (1711B) in which a phase transition temperature is set to absorb the heat generated by the battery associated with landing.

## Description

### CROSS REFERENCE TO RELATED APPLICATION

The present application is based on a Japanese Patent Application No. 2023-071012 filed in Japan on April 24, 2023, the contents of which are incorporated herein by reference in its entirety.

### TECHNICAL FIELD

The disclosure of the present specification relates to a cooling device and cooling system, mounted on an electric flying object to cool a battery.

### BACKGROUND ART

Patent document 1 discloses a cooling system for cooling battery packs installed in an electric aircraft. The contents of the prior art document are incorporated herein by reference as an explanation of technical elements in the present specification.

### PRIOR ART DOCUMENT

### PATENT DOCUMENT

Patent Document 1: JP Patent No. 2022-530619

### SUMMARY OF INVENTION

In the Patent Document 1, heat generated by a battery is absorbed by circulating a working fluid such as water. The heat generated by the battery packs is absorbed in flight by continuously circulating the working fluid through an on-board heat sink during flight. Further, an off-board cooling device on the ground is employed to absorb the heat generated by the battery packs by circulating the working fluid. However, the electric flying object has unique battery load profiles associated with takeoff, cruise, and landing operations, and the cooling system disclosed in Patent Document 1 may relatively shorten battery life. In the above-mentioned aspects, or in other aspects not mentioned, there is a need for further improvements in cooling devices and cooling systems that cool batteries.

It is an object of the present disclosure to provide a cooling device and cooling system that provides extended battery life.

According to an aspect of the present disclosure, a cooling device, mounted on an electric flying object to cool a battery of the electric flying object, includes a heat storage material made of one or more types, to absorb heat from the battery. The heat storage material includes, as a latent heat storage material, a first latent heat storage material in which a phase transition temperature is set to absorb heat generated by the battery associated with takeoff from among (i) the heat generated by the battery associated with takeoff and (ii) heat generated by the battery associated with landing, and/or a second latent heat storage material in which a phase transition temperature is set to absorb the heat generated by the battery associated with landing.

During takeoff and landing of the electric flying object, the batteries are subjected to high power output loads. According to the above-disclosed cooling device of the one aspect, the phase transition temperature of the latent heat storage material is set to focus on takeoff and landing, during which the heat generated by the battery steeply increases. The phase transition temperature of the first latent heat storage material is set to absorb the heat generated by the battery during takeoff. The phase transition temperature of the second latent heat storage material is set to absorb the heat generated by the battery during landing. The cooling device includes the first latent heat storage material and/or the second latent heat storage material as a latent heat storage material that utilizes latent heat. Thus, deterioration of the battery can be restricted, thereby extending battery life.

A cooling system according to an another aspect of the disclosures includes an on-board cooling device mounted in an electric flying object to cool a battery of the electric flying object by a heat storage material of one or more types, and an off-board cooling device configured to cool the battery on the ground. The heat storage material includes, as a latent heat storage material, a first latent heat storage material in which a phase transition temperature is set to absorb heat generated by the battery associated with takeoff from among (i) the heat generated by the battery associated with takeoff and (ii) heat generated by the battery during landing, and/or a second latent heat storage material in which a phase transition temperature is set to absorb the heat generated by the battery during landing. In addition, the off-board cooling device cools the heat storage material and the battery by flowing a flowable medium.

During takeoff and landing of the electric flying object, the batteries are subjected to high power output loads. According to the above-disclosed cooling system, the phase transition temperature of the latent heat storage material is set to focus on takeoff and landing, during which the heat generated by the battery steeply increases. The phase transition temperature of the first latent heat storage material is set to absorb the heat generated by the battery during takeoff. The phase transition temperature of the second latent heat storage material is set to absorb the heat generated by the battery during landing. The on-board cooling device includes the first latent heat storage material and/or the second latent heat storage material as a latent heat storage material that utilizes latent heat. Thus, deterioration of battery can be restricted, thereby extending battery life.

The off-board cooling device cools the heat storage material and the battery by flowing a flowable medium on the ground. Thus, a state of the flying object is adjustable in a short time for the next flight.

The disclosed aspects in the present specification adopt different technical solutions from each other in order to achieve the respective objects. Reference numerals in parentheses in the claims exemplify the correspondence with portions of embodiments described later, and are not intended to limit the technical scope. The objects, features, and advantages disclosed in the present specification will become apparent by referring to following detailed descriptions and accompanying drawings.

### BRIEF DESCRIPTION OF THE DRAWINGS

FIG. 1 is a view showing a configuration of an eVTOL and a ground station;
FIG. 2 is a view showing a cooling device and a battery according to a first embodiment;
FIG. 3 is a view showing an example of arrangement of battery cells;
FIG. 4 is a cross-sectional view taken along a line IV - IV of FIG. 3;
FIG. 5 is a view showing a power profile;
FIG. 6 is a view showing an example of arrangement of latent heat storage materials;
FIG. 7 is a view showing another example of arrangement of latent heat storage materials;
FIG. 8 is a view showing another example of arrangement of latent heat storage materials;
FIG. 9 is a view showing another example of arrangement of latent heat storage materials;
FIG. 10 is a view showing another example of arrangement of latent heat storage materials;
FIG. 11 is a view showing another example of arrangement of latent heat storage materials;
FIG. 12 is a view showing another example of arrangement of latent heat storage materials;
FIG. 13 is a view showing another example of arrangement of latent heat storage materials;
FIG. 14 is a view showing a relationship between battery temperature and a first PCM during flight;
FIG. 15 is a view showing a relationship between battery temperature and a second PCM during flight;
FIG. 16 is a view showing a relationship between battery temperature and the first and second PCMs during flight;
FIG. 17 is a view showing an example of a cooling device according to a second embodiment;
FIG. 18 is a view showing an example of the cooling device;
FIG. 19 is a view showing an example of arrangement of heat storage materials;
FIG. 20 is a view showing another example of arrangement of heat storage materials;
FIG. 21 is a view showing another example of arrangement of heat storage materials;
FIG. 22 is a view showing an example provided with a flow mechanism;
FIG. 23 is a view showing a relationship between a battery temperature and a heat absorption amount;
FIG. 24 is a view showing an example of a heat conduction assist member in a cooling device according to a third embodiment;
FIG. 25 is a view showing an example of the heat conduction assist member;
FIG. 26 is a view showing an example of arrangement of latent heat storage materials in a cooling device according to a fourth embodiment;
FIG. 27 is a view showing an example of arrangement of latent heat storage materials;
FIG. 28 is a view showing another example of arrangement of latent heat storage materials;
FIG. 29 is a view showing another example of arrangement of latent heat storage materials;
FIG. 30 is a view showing another example of arrangement of latent heat storage materials;
FIG. 31 is a view showing another example of arrangement of latent heat storage materials;
FIG. 32 is a view showing another example of arrangement of latent heat storage materials;
FIG. 33 is a view showing example of arrangement of latent heat storage materials;
FIG. 34 is a view showing a cooling device and a cooling system according to a fifth embodiment;
FIG. 35 is a view showing a relationship between devices that make up a cooling system and other devices; and
FIG. 36 is a view showing a cooling device and a cooling system according to a modification of the present embodiments.

### DETAILED DESCRIPTION

Hereinafter, multiple embodiments will be described with reference to drawings. The same reference numerals are assigned to the corresponding elements in each of those embodiments, and thus, duplicate descriptions may be omitted. When only a part of a configuration is described in each embodiment, the configurations of the other embodiments described above are applicable to the other parts of such configuration. Further, not only the combinations of the configurations explicitly shown in the description of the respective embodiments, but also the configurations of multiple embodiments can be partially combined even if they are not explicitly shown if there is no problem in the combinations in particular.

The cooling device and cooling system described in the following are applicable to an electric flying object. Note that the description of A and/or B means at least one of A and B. That is, such a description of A and/or B can include only A, only B, and both A and B.

### (First Embodiment)

An electric flying object includes a motor (rotating electric machine) as a drive source for traveling. The electric flying object may also be called as an electric airplane, an electric aircraft, or the like. The electric flying object can move vertically and horizontally. The electric flying object can move in a direction having a vertical component and a horizontal component, that is, an oblique direction. Examples of the electric flying object include an electric vertical take-off and landing aircraft (eVTOL), an electric short distance take-off and landing aircraft (eSTOL), a drone and the like. The eVTOL is an abbreviation of an electronic vertical take-off and landing aircraft. The eSTOL is an abbreviation of an electronic short distance take-off and landing aircraft.

The electric flying object may be either a manned aircraft or an unmanned aircraft. In case of a manned aircraft, the electric flying object is operated by a pilot as an operator. In case of an unmanned aircraft, the electric flying object may be operated by remote control by an operator or automatically controlled by a control system. As an example, the electric flying object the present embodiment is an eVTOL.

### <eVTOL>

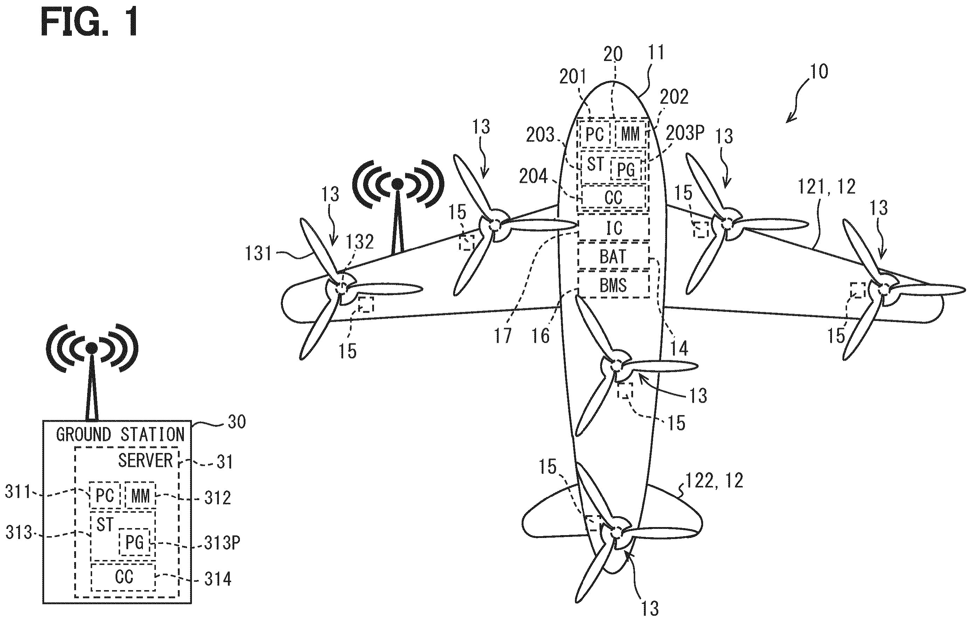

FIG. 1 shows an eVTOL and a ground station. As shown in FIG. 1, an eVTOL 10 has an airframe body 11, a fixed wing 12, a rotary wing 13, a battery 14, an EPU 15, a BMS 16, and a cooling device 17.

The airframe body 11 is a body portion of an airframe. The airframe body 11 extends in a front-rear direction. The airframe body 11 includes an occupant compartment for carrying occupants and/or a luggage compartment in which luggage is loaded.

Each of the fixed wings 12 is a wing portion of the airframe, and is continuous to the airframe body 11. The fixed wings 12 provide a gliding lift. The gliding lift is a lift generated by the fixed wings 12. The fixed wings 12 may have a main wing 121 and a tail wing 122. The main wing 121 extends in a left-right direction from a vicinity of a center of the airframe body 11 in the front-rear direction. The tail wing 122 extends in the left-right direction from a rear part of the airframe body 11. A shape of the fixed wing 12 is not particularly limited. For example, a swept-back wing, a delta wing, a straight wing or the like may be adopted.

Multiple rotary wings 13 are provided in the airframe. At least a part of the multiple rotary wings 13 may be provided on the fixed wing 12. At least a part of the multiple rotary wings 13 may be provided on the airframe body 11. The number of the rotary wings 13 provided in the eVTOL 10 is not particularly limited. There may be multiple rotary wings 13 on each of the airframe body 11 and the main wings 121.

Each of the rotary wings 13 may be referred to as a rotor, a propeller, a fan, or the like. The rotary wing 13 may have a blade 131 and a shaft 132. The blades 131 are attached to the shaft 132. The blades 131 are vanes that rotate together with the shaft 132. Multiple blades 131 extend radially around an axis of the shaft 132. The shaft 132 is an axis of rotation of the rotary wings 13, and is driven by a motor of the EPU 15.

The rotary wings 13 generate a propulsive force by rotation. The propulsive force acts on the eVTOL 10 primarily as a rotational lift force during the takeoff and landing operations of the eVTOL 10. The rotary wings 13 provide primarily rotational lift during takeoff and landing operations. The rotational lift is a lift generated due to the rotation of the rotary wing 13. During takeoff and landing operations, the rotary wings 13 may provide only rotational lift or may provide forward thrust along with rotational lift. The rotary wing 13 provides the rotational lift when the eVTOL 10 hovers.

Propulsive force acts on the eVTOL 10 primarily as thrust during cruise operation of the eVTOL 10. The rotary wings 13 primarily provide thrust during cruise operation. In cruise operation, the rotary wing 13 may provide thrust only or lift along with thrust.

The battery (BAT) 14 is an equipment for rotational drive of the rotary wings 13. The battery 14 is sometimes referred to as a battery pack. The battery 14 is capable of storing DC power, and has rechargeable battery cells. The battery cell is a secondary battery that generates an electromotive voltage by a chemical reaction. The battery cell is, for example, a lithium-ion secondary battery, a nickel-metal hydride secondary battery, or the like. The battery cell may be a secondary battery in which an electrolyte is a liquid, or may be what is called an all-solid-state battery in which an electrolyte is a solid. A battery cell can be configured in such a way that the ions (electrolyte) contributing to the battery reaction are transferred between the positive and negative electrodes via the electrolyte and/or solid electrolyte. The eVTOL 10 may be equipped with a fuel cell or generator further to the battery 14 as a power source to supply electric power to the equipment. The battery 14 provides electric power to the EPU 15.

The batteries 14 in the eVTOL 10 are required to have high output performance as well as high capacity. Therefore, a battery cell that provides high capacity and high output is desirable. From an output perspective, battery cells with low resistance over a wide SOC range are desirable. Battery cells with low resistance and high output are desirable, especially in the low SOC range. The SOC is an abbreviation of a state of charge.

As cathode materials for battery cells, LCO, NMC, NCA, LFP, and LMFP can be employed, for example. LCO is lithium cobaltate (LiCoO2). NMC is lithium nickel cobalt manganese oxide (Li(NiMnCo)O2). NCA is lithium nickel cobalt aluminate (Li(NiCoAl)O2). LFP is lithium iron phosphate (LiFePO4). LMFP is lithium manganese iron phosphate (LiFexMnyPO4). In particular, a positive electrode of LMFP or a positive electrode obtained by blending LMFP and NMC, which have low resistance in the low SOC range, is preferable.

As anode materials for battery cells, carbon-based materials such as hard carbon and soft carbon, silicon, lithium-based materials, and titanium-based materials such as LTO and NTO can be used. LTO is lithium titanate (Li4Ti5O12). NTO is niobium titanium oxide (TiNb2O7). In particular, a negative electrode of a carbon material or a negative electrode of a titanium material, which has low resistance in the low SOC range, is preferable.

The EPU 15 rotates and drives the rotary wings 13 that provide propulsive force to the eVTOL 10. The EPU 15 is the equipment used to drive the rotary wings 13. The EPU is an abbreviation of an electric propulsion unit. The EPU 15 corresponds to an electric propulsion system. The EPU 15 is equipped with a motor. The EPU 15 is equipped with an inverter and ESC further to the motor. ESC is an abbreviation of Electronic Speed Controller. As an example, the EPU 15 is provided in the same number as the rotary wings 13. In other words, the eVTOL 10 has six EPUs 15. The EPU 15 and the rotary wing 13 are connected one-to-one. As an alternative, two or more rotary wings 13 may be connected to one EPU 15 via a gearbox.

The BMS 16 monitors the status of the unit batteries that make up the battery 14. The BMS is an abbreviation of a battery management system. The BMS 16 can monitor a voltage, electric current, temperature, internal resistance, SOC, SOH, and other safety-related states such as internal pressure and gas leaks of the battery 14. The SOH is an abbreviation of a state of health. The BMS 16 may be integrated with the battery 14. A part of the BMS 16 may be integral to the battery 14, while other parts may be separate from the battery 14.

The cooling device (IC) 17 is a cooling device installed in the flying object. Therefore, the cooling device 17 is sometimes referred to as the on-board cooling device. The cooling device 17 cools the battery 14. The cooling device 17 cools the battery 14 using a heat storage material. Details of the cooling device 17 are described later.

The eVTOL 10 further includes an ECU 20 and auxiliary devices (not shown). The ECU is an abbreviation of Electronic Control Unit. The eVTOL 10 may be equipped with a lift adjustment mechanism not shown. The lift adjustment mechanism adjusts the gliding lift of the fixed wings 12. The lift adjustment mechanism increases or decreases the glide lift generated by the fixed wing 12. The eVTOL 10 may have, as a lift adjustment mechanism, for example, a tilt mechanism or a flap. The tilt mechanism is driven to adjust a tilt angle of the rotary wings 13. The flaps are movable wing pieces, and are provided on the fixed wing 12.

### <Operation Management Device>

An operation control device is used to plan operations, monitor operations, collect and manage information on operations, and provide support for operations. At least some of the functions of the operation control device may be provided in an on-board computer of the eVTOL 10. At least some of the functions of the operation control device may be provided on an off-board computer that can communicate wirelessly with the eVTOL 10. An example of the off-board computer is a server 31 of a ground station 30 shown in FIG. 1. The ground station 30 can wirelessly communicate with the eVTOL 10. The ground station 30 can wirelessly communicate with other ground stations.

As an example, in the present embodiment, some of the functions of the operation control device are provided in the ECU 20 of the eVTOL 10, and some of the functions of the operation control device are provided in the server 31 of the ground station 30. The functions of the operation control device are shared between the ECU 20 and the server 31.

As shown in FIG. 1, the ECU 20 is made of a processor (PC) 201, a memory (MM) 202, a storage (ST) 203, a communication circuit (CC) 204 for wireless communication, and the like. The processor 201 executes various processes by accessing the memory 202. The memory 202 is a rewritable volatile storage medium. The memory 202 is, for example, a RAM. The RAM is an abbreviation of a random-access memory. The storage 203 is a rewritable nonvolatile storage medium. The storage 203 stores a program (PG) 203P to be executed by the processor 201. The program 203P constructs multiple functional units by causing the processor 201 to execute multiple instructions. The ECU 20 may include multiple processors 201.

Similar to the ECU 20, the server 31 includes a processor (PC) 311, a memory (MM) 312, a storage (ST) 313, a communication circuit (CC) 314, and the like. The processor 311 executes various processes by accessing the memory 312. The memory 312 is a rewritable volatile storage medium, for example, a RAM. The storage 313 is a rewritable nonvolatile storage medium. The storage 313 stores a program (PG) 313P to be executed by the processor 311. The program 313P constructs multiple functional units by causing the processor 311 to execute multiple instructions. The server 31 may include multiple processors 311.

### <Battery>

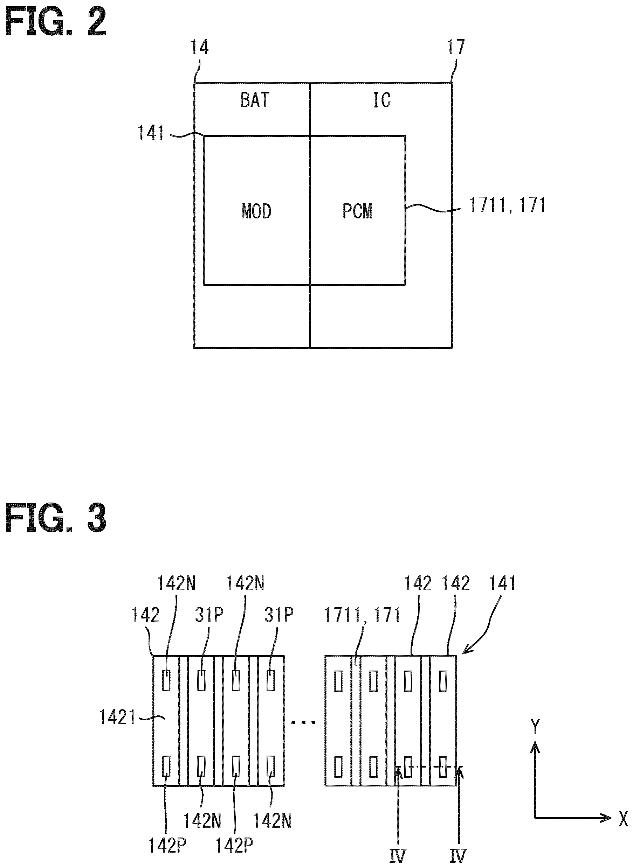

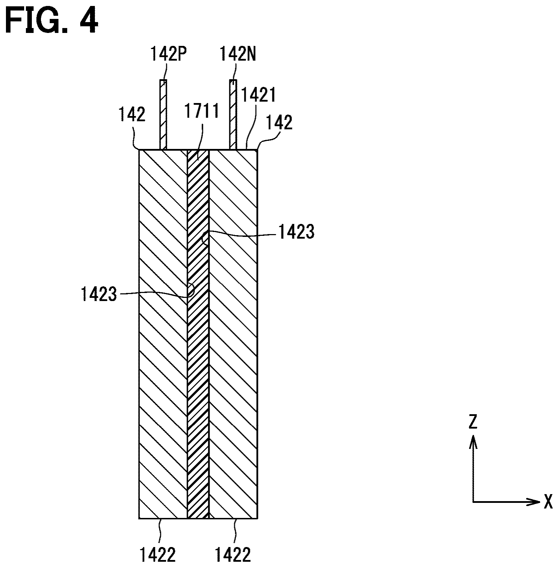

FIG. 2 shows the cooling device in the first embodiment. FIG. 2 shows a relationship between the cooling device and the battery. FIG. 3 shows an example of arrangement of battery cells. FIG. 4 is a cross-sectional view taken along a line IV -IV of FIG. 3. In the following, regarding each of the battery cells, a height direction is indicated as a Z direction, a longitudinal direction is indicated as a Y direction, and a width direction is indicated as an X direction, respectively. The X direction, the Y direction, and the Z direction are orthogonal to each other. In FIG. 4, the entire battery cell is metal hatched for convenience.

As shown in FIG. 2, the battery 14 has a battery module (MOD) 141. As shown in FIG. 3, the battery module 141 is a module of a multiple battery cells (CELLs) 142. The battery module 141 is a battery assembly having multiple battery cells 142.

The multiple battery cells 142 share a common structure with each other. The number and arrangement of the multiple battery cells 142 are not limited. The multiple battery cells 142 may be connected (i) in series or (ii) in parallel and in series.

The battery cell 142 has a power generating element and a battery case that houses the power generating element. The battery case provides an outer contour of the battery cells 142. The battery case may be formed, for example, using metal materials or laminated films. The shape of the battery cell 142, or battery case, is not limited. For example, it can be cylindrical or square shaped. It may also be a laminated type. As shown in FIG. 4, the battery cell 142 has end faces 1421, 1422 and side faces 1423. The end face 1421 is opposite to the end face 1422 in the Z direction. The side face 1423 is a surface connecting the end face 1421 and the end face 1422. The end faces 1421, 1422 are surfaces, excluding the side faces 1423.

Each battery cell 142 has electrode terminals 142P, 142N. The electrode terminals 142P, 142N may be provided only on the end face 1421. The electrode terminals 142P and 142N may be provided on each of the end faces 1421 and 1422. For example, the electrode terminals 142P, 142N may be provided on the end face 1421 and also on the end face 1422. One of the electrode terminals 142P, 142N may be provided on one of the end faces 1421, 1422, and the other of the electrode terminals 142P, 142N may be provided on the other one of the end faces 1421, 1422. The electrode terminals 142P, 142N protrude from the corresponding end faces. The electrode terminal 142P is electrically connected to the positive electrode of the battery cell 142. The electrode terminal 142P is sometimes referred to as the positive terminal, P terminal, or the like. The electrode terminal 142N is electrically connected to the negative electrode of the battery cell 142. The electrode terminal 142N is sometimes referred to as the negative terminal, N terminal, or the like. Electrode terminals are sometimes referred to as battery cell terminals, current collecting tabs, or the like.

As an example, the battery cells 142 in the present embodiment have a square shape, specifically a thin flat shape that is thin in the X direction. The multiple battery cells 142 are arranged side by side in the X direction. The electrode terminals 142P, 142N are provided on the end face 1421. The multiple battery cells 142 are arranged so that the electrode terminals 142P and 142N are alternately located in the X direction. Further, the end faces 1421 are arranged so that their Z directional positions are approximately equal to each other. In the adjacent battery cells 142, the electrode terminals 142P and 142N are electrically connected by a bus bar, which is not shown.

The battery module 141 may have multiple battery cells 142 arranged along the X direction. The arrangement of the battery cells 142 is not limited to the arrangement described above. For example, in case of cylindrical battery cells 142, they may be arranged in a staggered arrangement in a plan view from the Z direction. The electrode terminals 142P, 142N may be provided on each of the end faces 1421 and 1422.

### <Cooling Device>

The cooling device 17 cools the battery 14. The cooling device 17 may be entirely or partially integrated with the battery 14. The cooling device 17 may be arranged inside the battery 14. The cooling device 17 may be separately provided from the battery 14, and may be thermally connected to the battery 14. The cooling device 17 may be integral to the BMS 16, or it may be separately provided from the BMS 16 and communicatively connected to the BMS 16.

As shown in FIG. 2, the cooling device 17 has at least one heat storage material 171. The heat storage material 171 is a component that can store heat, i.e., a component that exerts a heat storage effect. The heat storage material 171 cools a target component by absorbing heat from it. The heat storage material 171 cools the battery cells 142 by absorbing heat generated by the battery cells 142 during charging and discharging. The heat storage material 171 is sometimes referred to as cold storage material.

The heat storage material 171 contains at least latent heat storage material (PCM) 1711. PCM is an abbreviation of Phase Change Material. The latent heat storage material 1711 undergoes a phase change between solid and liquid phases and between solid phases. The latent heat storage material 1711 has a very large energy (latent heat) input and output during the phase change compared to sensible heat, such as water. Such an energy flow in and out of the battery 14 is utilized to suppress the temperature rise of the battery 14, for maintaining the battery temperature in a specific temperature range near the phase transition temperature. The use of the latent heat storage material 1711 can reduce the size, or cooling volume, of the cooling device 17. Further, electric power and maintenance for cooling are no longer required.

Materials for latent heat storage materials that change phase from solid phase to liquid phase include organic materials such as paraffin, fatty acids, fatty acid esters, and sugar alcohols, and inorganic hydrate materials such as sodium acetate, sodium sulfate, and sodium nitrate. Paraffin, for example, has a relatively large latent heat, is inexpensive, and the phase transition temperature is easily adjustable according to molecular weight. Paraffin has such characteristics as less problems with supercooling phenomena and phase separation. Latent heat storage materials that utilize latent heat during the phase change between solid and liquid phases are not limited to the above examples.

The latent heat storage material can be made of a material whose crystalline structure changes in the solid state. Materials that undergo a phase change while in the solid phase include (i) electronic phase transition heat storage materials that undergo a metal-insulator transition such as VO2, vanadium oxides doped with multiple elements in VO2, (ii) materials that undergo martensitic transformation, and the like. Other examples include thermochromic materials, soft-viscous crystals, magnetic phase transition materials, ferroelectric-paraelectric transition materials and the like. Since the phase transition takes place in the solid phase, those materials do not liquefy and the volume change of them is small, making it easy to handle without the need for containers or other restrictions. Latent heat storage materials that utilize latent heat during the phase change between solid phases are not limited to the above examples.

The form of use of the latent heat storage material 1711 is not limited. The latent heat storage material 1711 may be used in a metal case, metal pack, or other heat-conductive container. The latent heat storage material 1711 may be used in a capsule filled with the material. The size of the capsule should be no greater than a few millimeters. For example, it can be a capsule of the order of several micrometers to several thousand micrometers, or a nanocapsule of the order of several nm to several hundred nm. The latent heat storage material 1711 may be used as filling in a housing of the battery 14, which is not shown, so that it is thermally connected to a part or all of the battery cells 142. The latent heat storage material 1711 may be used in a composite state with a matrix. The matrix is referred to as a support, holding body, or originating body. For example, the latent heat storage material 1711 may be held in the voids of a metal foam, porous metal, or porous carbon. The latent heat storage material 1711 may be composited with resin, rubber, or gel. The latent heat storage material 1711 may be molded into a predetermined shape together with a binding material (binder) or other materials. The predetermined shape may be, for example, a sheet, film, plate, or tube. The latent heat storage material 1711 may be used dispersed in a fluid heat storage material.

When the latent heat storage material 1711 needs to retain its structure through a phase change from solid to liquid phase, one of the above-mentioned forms of use, filling in a container, filling in a capsule, or compositing with a matrix, should be used. In such manner, the latent heat storage material 1711 is treatable like solids. That is, even when the latent heat storage material 1711 changes phase from solid to liquid, it can be held at a predetermined position. The latent heat storage material 1711 may be filled into a capsule and molded into a predetermined shape, or it may be composited with resin, rubber, or gel. It may be dispersed and mixed in the fluid heat storage material.

The heat storage material 171 may include other heat storage materials further to the latent heat storage material 1711. For example, it may contain a fluid heat storage material as described below. It may contain metallic materials such as aluminum, copper and the like.

The total heat storage amount of the heat storage material 171 to absorb heat from the battery 14 may preferably be set so that the battery temperature during flight is equal to or lower than an upper limit temperature for operation, based on the heat storage amount at the start of flight, the output load during flight, and heat dissipation characteristics of the battery 14, excluding the effect of the heat storage material 171. The amount of the latent heat storage material 1711 may be set so that the phase change of the latent heat storage material 1711 is complete by absorption of the heat generated by the battery 14 due to the output load during flight. The amount of the latent heat storage material 1711 may be set so that an uncompleted portion of the phase change remains in the latent heat storage material 1711 after absorption of the heat generated by the battery 14 due to the output load during flight. The above-described settings may be made on a flight-by-flight basis or on a route-by-route basis. It may also be made according to seasons of the year. It may also be made on airframe-by-airframe basis, or on model-by-model basis.

The total heat storage amount, e.g., the amount of heat storage material 171 loaded, may be set using a thermal analysis simulation model or the like. Various parameters required for thermal analysis simulation may be extracted from prior experiments, flight history and the like. For example, the amount of heat stored at the start of flight may be estimated from the battery temperature and/or the temperature of the heat storage material 171 at the start of flight. The output load during flight may be estimated from the flight path and past flight history. The heat dissipation characteristics of the battery 14 may be obtained by prior experimentation.

The risk of over-heat of the battery 14 during flight is reducible by calculating the heat storage amount at the start of flight, the output load during flight, and the heat dissipation characteristics of the battery as the worst possible case of assumption. For example, if landing at the planned landing site becomes difficult, the total heat storage amount may be set to account for the output load required to fly to an alternate landing site and/or for landing retry. In such manner, the over-heat abnormality of the battery 14 is suppressed, thereby increasing the safety of the battery 14 in the event of trouble during flight. Further, the output load during flight may assume multiple flights in accordance with the flight plan.

Further to the heat storage material 171, the cooling device 17 may have a cooling mechanism separate from the heat storage material 171. The cooling device 17 may have a mechanism for heat exchange of the heat generated by the battery 14 with a metal frame of the airframe. For example, a heat sink that exchanges heat with cold air introduced from outside may be provided. The cold air may be cold air introduced from outside the airframe or from the on-board air conditioning device.

Further to the cooling function, the cooling device 17 may have monitoring functions and control functions. The cooling device 17 may monitor the temperature of the heat storage material 171. The cooling device 17 may monitor the temperature of the battery 14. When the fluid heat storage material, described below, is included, the operation of a pump to flow the fluid heat storage material may be controlled. The cooling device 17 may notify the operation control device of a request for limiting the output of the battery 14 based on the battery temperature and/or the heat storage information of the heat storage material 171. The monitoring functions and control functions of the cooling device 17 may be provided in the ECU 20. The BMS 16 and/or the operation control device may have the monitoring functions and control functions described above.

### <Power Profile>

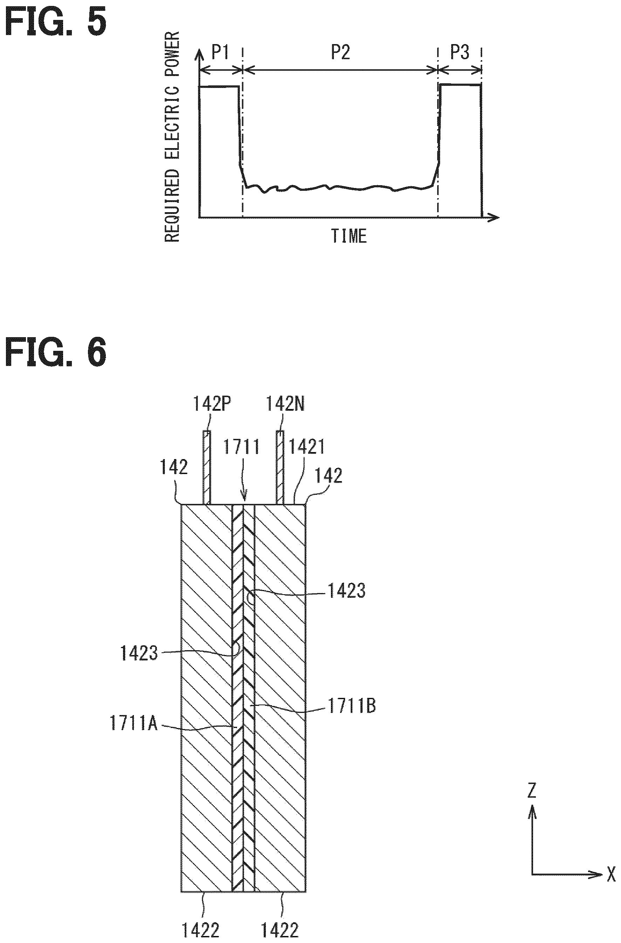

FIG. 5 shows a power profile of the eVTOL 10 from takeoff to landing. The power profiles of electric flying objects other than the eVTOL are also similar to those of the eVTOLs10. Period P1 is referred to as a takeoff operation time, takeoff time, takeoff period, etc. Period P2 is referred to as a cruise operation time, cruise time, cruise period, etc. Period P3 is referred to as a landing operation time, landing time, landing period, etc. Periods P1 and P3 are collectively referred to as a takeoff/landing operation time, takeoff/landing time, takeoff/landing period, etc. For convenience, in FIG. 1, the required electric power, that is, an output is constant in substantially an entire region of each of the periods P1 and P3.

The eVTOL 10 ascends from a takeoff point to a cruise start point in period P1. The eVTOL 10 cruises at a predetermined altitude in period P2. The eVTOL 10 descends from an end of period P2 to a landing point in period P3. The travel of the eVTOL 10 includes mainly a horizontal component in period P2, and mainly a vertical component in periods P1 and P3. In periods P1 and P3 of vertical travel, high output power is required to drive the rotary wings 13 for a given continuous time.

Thus, during takeoff and landing, the battery 14 is subjected to a high output load. The heat generated by the battery 14 steeply increases during takeoff and landing. Therefore, in a configuration that cools the battery 14 using the sensible heat of a working fluid such as water or air, the heat absorption may be not sufficient, resulting in an over-heat abnormality of the battery 14 and running a risk of battery output shutdown. Further, the steep increase in heat generation accelerates the deterioration of the battery 14, which may lead to an extremely short battery life.

### <Arrangement of Latent Heat Storage Material>

The latent heat storage material 1711 is thermally connected to the battery cell 142. The latent heat storage material 1711 may be in direct or indirect contact with a surface that forms an outline of the battery cell 142. For example, it may contact the battery cell 142 through a heat-conducting material such as TIM. The TIM is an abbreviation of Thermal Interface Material. The latent heat storage material 1711 may contact the end face 1421 or the end face 1422. It may also contact the side face 1423. The latent heat storage material 1711 may contact the side faces 1423 of different battery cells 142, i.e., may contact multiple side faces 1423. The latent heat storage material 1711 may contact only one side face 1423.

As an example, the latent heat storage material 1711 in the present embodiment is in contact with the side face 1423 of the battery cell 142. The latent heat storage material 1711 is in contact with the longitudinal side face 1423 of the side face 1423. The latent heat storage material 1711 is arranged alternately with the battery cell 142 in the X direction as shown in FIG. 3. The latent heat storage material 1711 is arranged between adjacent battery cells 142, and contacts each of the side faces 1423 facing each other as shown in FIG. 4. The latent heat storage material 1711 is arranged on the side face 1423 of the battery cell 142. The thickness of the latent heat storage material 1711 is approximately uniform within the plane surface.

FIGS. 6 through 13 each show an example arrangement of a latent heat storage material. FIGS. 6 through 13 correspond to FIG. 4. The heat storage material 171 includes a latent heat storage material 1711A and/or a latent heat storage material 1711B as the latent heat storage material 1711. The latent heat storage material 1711A has a phase transition temperature set to absorb heat generated by the battery 14 during takeoff, from among (i) the heat of the battery 14 associated with takeoff and (ii) the heat of the battery associated with landing. The latent heat storage material 1711B has a phase transition temperature set to absorb heat generated by the battery 14 during landing, from among (i) the heat of the battery 14 associated with takeoff and (ii) the heat of the battery associated with landing. The latent heat storage material 1711A corresponds to a first latent heat storage material, and the latent heat storage material 1711B corresponds to a second latent heat storage material. In the following, the latent heat storage material 1711A may be referred to as PCM1 (first PCM) and the latent heat storage material 1711B as PCM2 (second PCM).

The cooling device 17 may have only the latent heat storage material 1711A or only the latent heat storage material 1711B as the latent heat storage material 1711. The cooling device 17 may have both of the latent heat storage material 1711A and the latent heat storage material 1711B as the heat storage material 171.

In the configuration where the latent heat storage material 1711 is arranged on the side faces 1423, for example, as shown in FIG. 6, the latent heat storage material 1711 may be double layered between the side faces 1423 of the adjacent battery cells 142. Two types of the latent heat storage materials 1711A and 1711B are stacked and arranged in the X direction between the side faces 1423 facing each other. The latent heat storage material 1711A contacts one side face 1423 of the battery cell 142 on one side thereof, and the latent heat storage material 1711B contacts the other side face 1423 of the battery cell 142 on the other side. Each of the latent heat storage materials 1711A and 1711B contacts almost entire corresponding side face 1423.

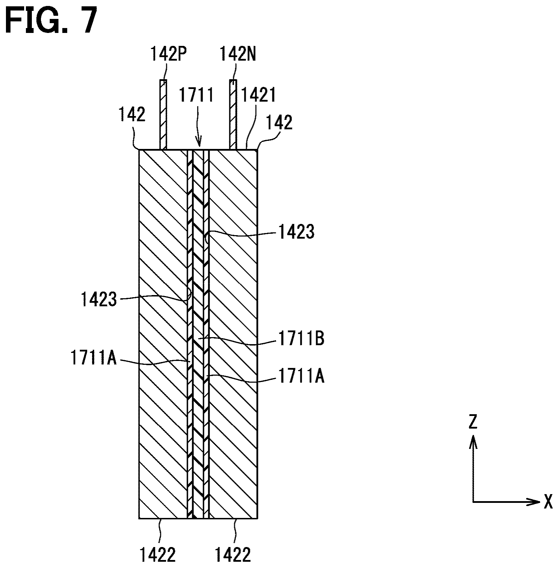

As shown in FIG. 7, the latent heat storage material 1711 may be three-layered between the side faces 1423. In FIG. 7, the latent heat storage material 1711A, the latent heat storage material 1711B, and the latent heat storage material 1711Aare stacked in such order in the X direction. One of the latent heat storage materials 1711A contacts one side face 1423 of one of the battery cells 142, and the other one of the latent heat storage materials 1711A contacts the side face 1423 of the other battery cell 142. The latent heat storage material 1711B is thermally connected to the battery cell 142 via the latent heat storage material 1711A.

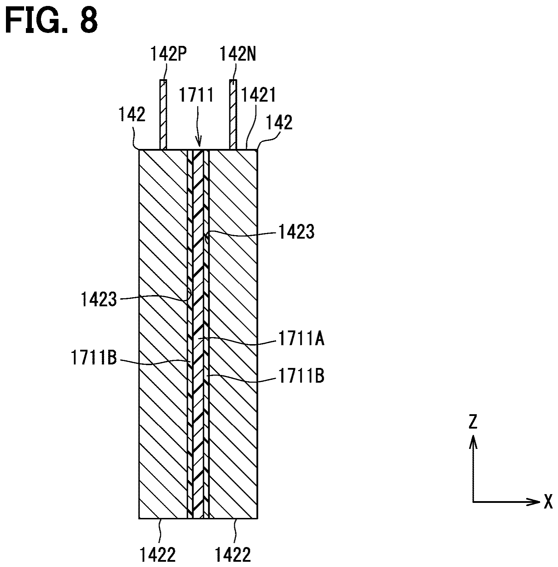

As shown in FIG. 8, the latent heat storage material 1711 can be three-layered between the side faces 1423. In FIG. 8, the latent heat storage material 1711B, the latent heat storage material 1711A, and the latent heat storage material 1711B are stacked in the X direction in an illustrated order. One of the latent heat storage materials 1711B contacts the side face 1423 of one of the battery cells 142, and the other one of the latent heat storage materials 1711B contacts the side face 1423 of the other battery cell 142. The latent heat storage material 1711A is thermally connected to the battery cell 142 via the latent heat storage material 1711B.

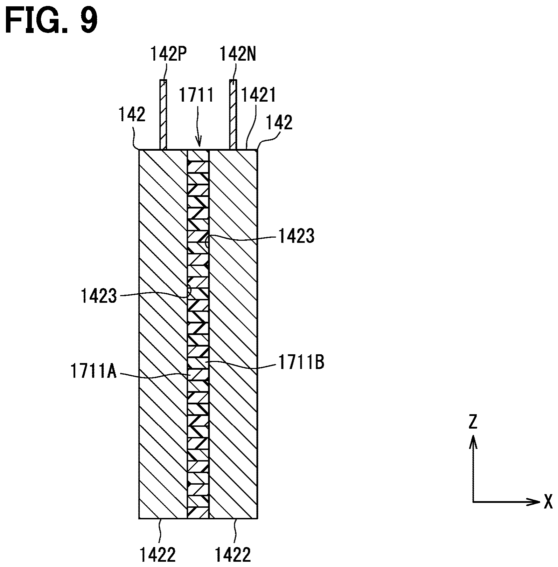

As shown in FIG. 9, the latent heat storage materials 1711A and 1711B may be arranged alternately in the Z direction between the side faces 1423. Each of the latent heat storage materials 1711A and 1711B is in contact with the side faces 1423 on both sides.

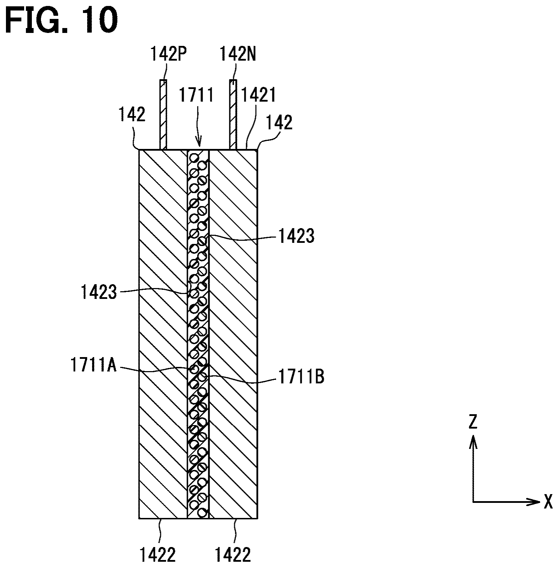

As shown in FIG. 10, the latent heat storage materials 1711A and 1711B may be arranged between the side faces 1423 while housed in a capsule. The latent heat storage material 1711A and the latent heat storage material 1711B are housed in different capsules from each other. The two types of capsules may be housed in a common container or held in a common matrix. They may be integrally molded with a binding material or the like. The two types of capsules may be arranged in a layered arrangement as shown in FIG. 10, or they may be dispersed and mixed.

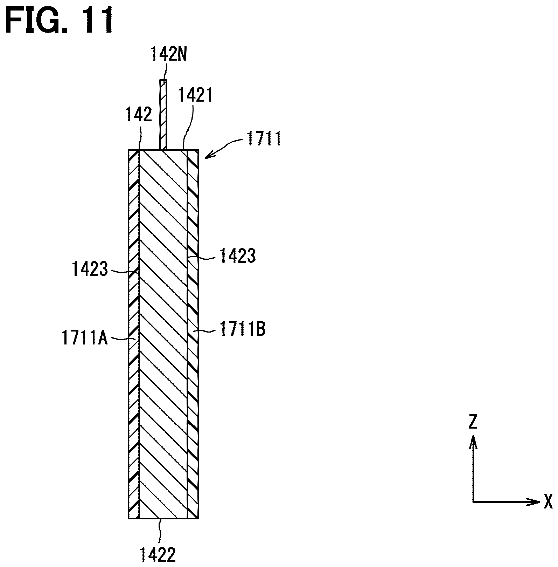

FIGS. 6 through 10 show an example of two types of latent heat storage materials 1711A and 1711B arranged between the side faces 1423. Instead, as shown in FIG. 11, the latent heat storage material 1711A may be arranged on one of the side faces 1423 of one battery cell 142, and the latent heat storage material 1711B may be arranged on the other one of the side faces 1423 thereof. The latent heat storage material 1711A contacts one of the side faces 1423 in the X direction, and the latent heat storage material 1711B contacts the side face 1423 on an opposite side of the latent heat storage material 1711A. In such case, each of the latent heat storage materials 1711A and 1711B absorbs heat from one side.

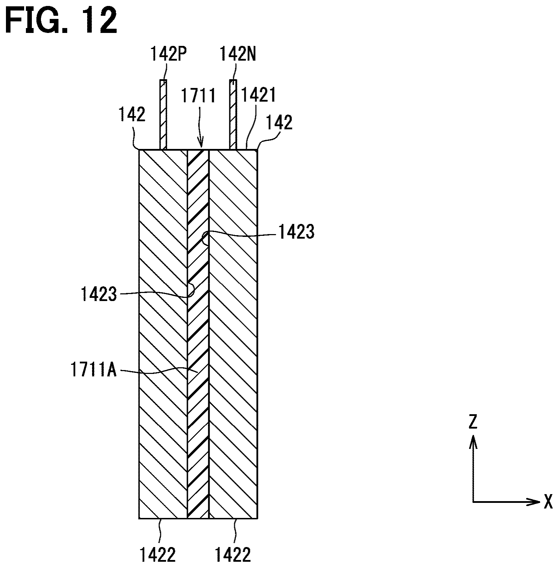

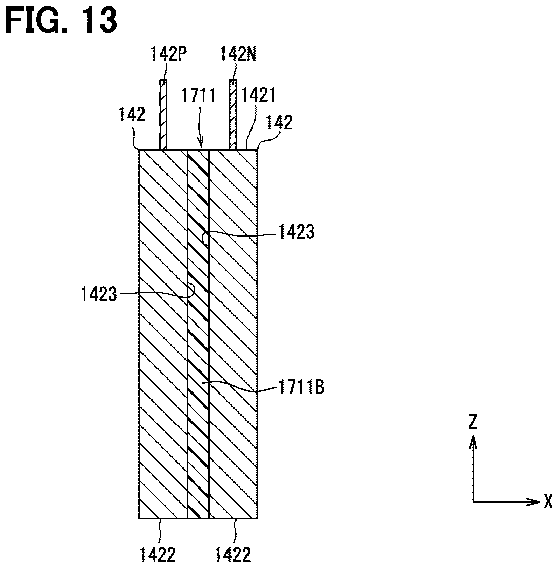

FIGS. 6 through 11 show examples of two types of latent heat storage materials 1711A and 1711B. Instead, as shown in FIG. 12, only the latent heat storage material 1711A may be arranged between the side faces 1423 of the adjacent battery cells 142. As shown in FIG. 13, only the latent heat storage material 1711B may be arranged between the side faces 1423.

### <Battery Temperature and Latent Heat Storage Material>

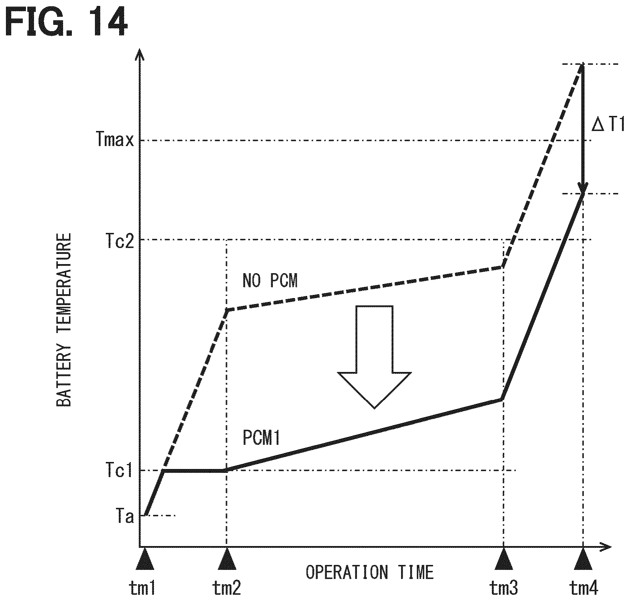

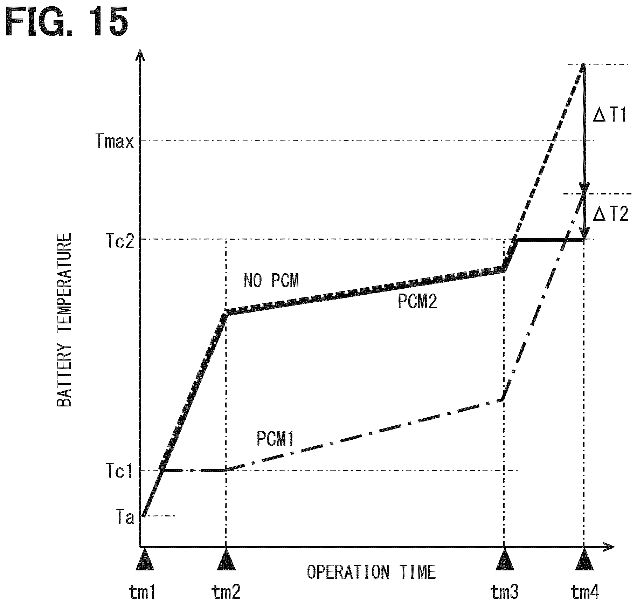

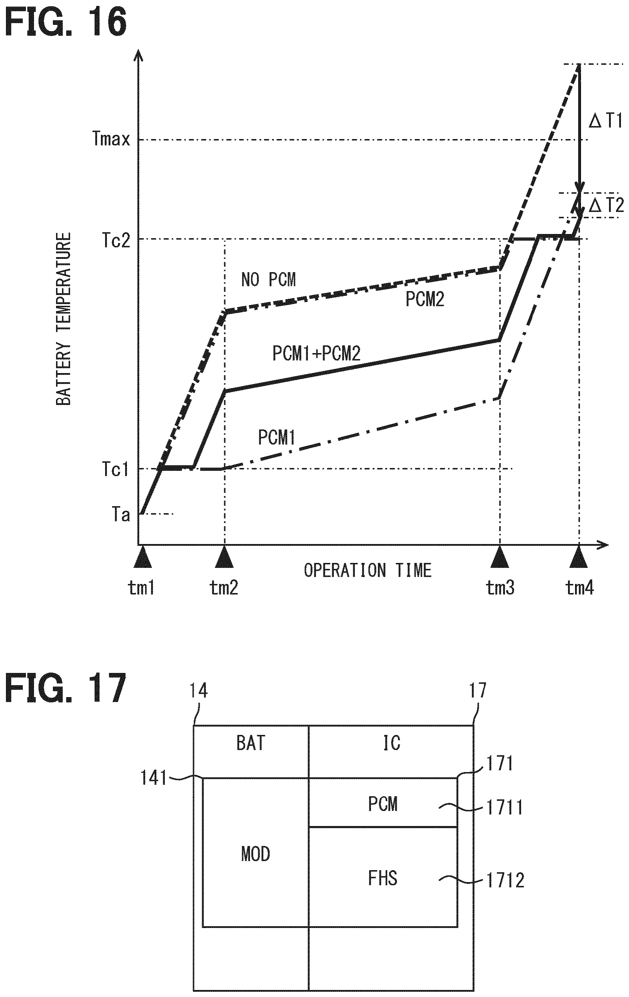

FIG. 14 shows the relationship between battery temperature and PCM1 during flight. FIG. 15 shows the relationship between battery temperature and PCM2 during flight. FIG. 16 shows the relationship between battery temperature and PCM1 and PCM2 during flight. In FIGS. 14 through 16, the total amount of latent heat storage material 1711 is assumed constant. FIG. 14 shows the effect of PCM1. FIG. 15 shows the effect of PCM2. FIG. 16 shows the effect of combining PCM1 and PCM2. In FIG. 16, the amount of each of PCM1 and PCM2 is considered as 1/2 of the total amount.

In FIGS. 14 through 16, the change in battery temperature without PCM (the latent heat storage material 1711) is shown by a broken line as a comparative example. Time tm1 indicates a timing of the start of takeoff, and time tm2 indicates a timing of the temperature change associated with the switch from takeoff operation to cruise operation. Time tm3 indicates a timing of the temperature change associated with the switch from cruise operation to landing operation, and time tm4 indicates a timing of the completion of landing. Temperature Ta indicates an ambient temperature, and temperature Tmax indicates an allowable upper limit temperature. Temperature Tc1 indicates a phase transition temperature of PCM1, and temperature Tc2 indicates a phase transition temperature of PCM2. The relationship among those temperatures is Ta < Tc1 < Tc2 < Tmax.

As described above, during takeoff and landing, the battery 14 is subjected to a high output load. Therefore, when the PCM (the latent heat storage material 1711) is not used, the battery temperature rises steeply between time tm1 and time tm2 and between time tm3 and time tm4, as shown by the broken lines in FIG. 14. During a period from time tm2 to time tm3, the battery temperature changes due to the balance between the heat generated by the battery 14 due to cruising operation and the heat dissipation due to the difference from the ambient temperature Ta and other factors. As an example, in FIG. 14, the temperature rises at a more gradual slope than during takeoff and landing. The battery temperature is higher at landing than at takeoff.

PCM1 absorbs the heat generated by the battery 14 during takeoff. When PCM1 (the latent heat storage material 1711A) is used, the battery temperature rises to the phase transition temperature Tc1 and is maintained near the phase transition temperature Tc1, as shown by a solid line in FIG. 14. In FIG. 14, the amount of PCM1 is set so that the phase change of PCM1 is complete by the absorption of the heat generated by the battery due to the output load during takeoff. Therefore, the battery temperature rises after time tm2. Since the battery temperature is low and the difference from the ambient temperature Ta is smaller than in the comparison case, the battery temperature rises with a steeper slope than in the case without using PCM during a period between time tm2 and time tm3. However, since it is a period of cruising, the slope is smaller than that at takeoff or landing. From time tm3 to time tm4, the battery temperature changes (rises) just like the one in the comparison case.

ΔT1 shows the difference in battery temperature at the time of landing completion relative to the comparative case, i.e., the effect of lowering temperature by the latent heat storage material 1711A (i.e., the latent heat storage material 1711). When using PCM1 (i.e., the latent heat storage material 1711A), a frequency of occasions having the low temperature during operation is increased.

In FIG. 15, the change in the battery temperature when only PCM1 (the latent heat storage material 1711A) is used as a comparative example is shown by a one-dot chain line. PCM2 absorbs the heat generated by the battery 14 during landing. When PCM2 (the latent heat storage material 1711B) is used, as shown by the solid line in FIG. 15, the battery temperature changes in the same manner as in the comparative case without using PCM which is shown by the broken line by the time of reaching the phase transition temperature Tc2. From the time of reaching the phase transition temperature Tc2 until time tm4, i.e., up to the time of completing the landing, the battery temperature is maintained near the phase transition temperature Tc2.

ΔT2 indicates a temperature difference from the ambient temperature Ta, i.e., the effect of lowering of the temperature due to heat dissipation. When PCM2 (the latent heat storage material 1711B) is used, the temperature difference from the ambient temperature Ta during a period between time tm2 and time tm3 is greater than when PCM1 is used. Therefore, heat dissipation is facilitated. The effect of ΔT2 further to ΔT1 described above can further lower reached temperature at the point of landing completion.

Further, the following effects are achievable due to the increased frequency of occasions of high temperature during the operation. The battery performance can be maintained due to the heat retention effect during cruising in winter time. That is, ionic fluidity in the electrolyte is increased in such manner, thereby softening temporary deterioration of the battery 14 due to temporary bias in the distribution of ion concentrations. It also reduces the increase in resistance under low SOC conditions.

In FIG. 16, as a comparative example, the change in the battery temperature when only PCM1 (the latent heat storage material 1711A) is used is shown by the one-dot chain line, and the change in the battery temperature when only PCM2 (the latent heat storage material 1711B) is used is shown by a two-dot chain line. When PCM1 and PCM2 are used, the change in the battery temperature reflects the characteristics of both of PCM1 and PCM2. As shown by the solid line in FIG. 16, the battery temperature is maintained near the phase transition temperature Tc1 when it rises to Tc1. However, due to the small amount of PCM1, the phase change of PCM1 is complete before time tm2 and the battery temperature rises. In other words, PCM1 absorbs a part of the heat generated by the battery 14 during takeoff.

In such manner, the battery temperature at time tm2 is the one in between a PCM1-only case and a PCM2-only case. The effect of heat dissipation is also intermediate, i.e., between the two cases, and the slope of the battery temperature from time tm2 to time tm3 is also intermediate between the PCM1-only case and the PCM2-only case. The battery temperature at time tm3 is between the one of the PCM1-only case and the one of the PCM2-only case. The battery temperature reaches the phase transition temperature Tc2 at a timing later than in the PCM2-only case. However, due to the small amount of PCM2, the phase change of PCM2 is complete before time tm4 and the battery temperature rises. PCM2 absorbs a part of the heat generated by the battery 14 during landing. ΔT2 is smaller than when PCM2 is used. The ratio of PCM1 and PCM2 is not limited to 1:1. PCM1 ratio may be greater than PCM2 ratio or vice versa.

### <Overview of First Embodiment>

As described above, the eVTOL 10 applies a high output load to the battery 14 during takeoff and landing. In the cooling device 17 of the present embodiment, the phase transition temperature of the latent heat storage material 1711 is set to focus on takeoff and landing, during which the heat generated by the battery 14 steeply increases. The phase transition temperature of the latent heat storage material 1711A (PCM1, the first latent heat storage material) is set to absorb the heat generated by the battery 14 during takeoff. The phase transition temperature of the latent heat storage material 1711B (PCM2, the second latent heat storage material) is set to absorb the heat generated by the battery 14 during landing. The cooling device 17 includes the latent heat storage materials 1711A and/or 1711B as the latent heat storage material 1711 that utilizes latent heat.

Since the latent heat is utilized to effectively absorb the heat from the battery 14 at the timing of high output load, deterioration of the battery life due to non-timely, insufficient heat absorption is suppressible. In other words, the life of the battery 14 is extendable. It is possible to suppress the output shutdown of the battery 14 due to an over-heat abnormality. Further, the weight is reducible compared to a configuration that uses only sensible heat for cooling.

In particular, the use of latent heat storage material 1711A can increase the frequency of occasions having low temperature during operation, as shown in FIG. 14. Thus, the effect of extending the life of the battery 14 is enhanced. When the latent heat storage material 1711B is used, the frequency of occasions of having high temperature is increased as shown in FIG. 15, and the difference with the ambient temperature Ta causes the heat to dissipate, thereby lowering the reached temperature. Thus, the amount of the latent heat storage material 1711B is reducible for a given reached temperature, and the weight is further reducible. When the latent heat storage material 1711A and the latent heat storage material 1711B are used, the effect is exerted according to the amounts (ratios) of the latent heat storage material 1711A and the latent heat storage material 1711B, as shown in FIG. 16. That is, depending on the takeoff/landing load (airframe type), cruise load (flight distance), environmental conditions (region, season), etc., the system including the battery is adjustable to meet various needs in terms of battery life, weight reduction, and even safety, i.e., in multiple aspects. From the scheme described above, the various needs of the eVTOL 10 can be met by appropriately selecting the latent heat storage material 1711A (PCM1) and the latent heat storage material 1711B (PCM2).

The total amount of heat absorbable by using the heat storage material 171 for absorbing heat from the battery 14 may preferably be set so that the battery temperature during the flight is equal to or lower than the upper limit temperature for operation, based on the amount of stored heat at the start of flight, the output load during flight, and the heat dissipation characteristics of the battery 14. In such manner, cooling of the battery during flight is appropriately performable only by using the heat storage material 171. Thus, the weight is reducible.

The amount of the latent heat storage material 1711 may be set so that the phase change of the latent heat storage material 1711 is complete by absorption of the heat generated by the battery 14 due to the output load during flight. By eliminating excess of the latent heat storage material 1711, the weight is reducible. Further, when the latent heat storage material 1711 entirely changes its phase, the temperature gradient (slope) of the battery becomes steeper. By observing the temperature change, it is recognizable that a remaining amount of heat storage capacity by the latent heat storage material 1711 has reached zero. In such manner, for example, imposing output restriction may be performable.

The amount of the latent heat storage material 1711 may be set so that an uncompleted portion of the phase change remains in the latent heat storage material 1711 after absorption of the heat generated by the battery 14 due to the output load during flight. In such manner, it is possible to suppress (i) the occurrence of temperature irregularities (temperature variations) in the battery 14 or (ii) the expansion of temperature irregularities in the battery 14 due to insufficient absorption to keep up with the sudden heat generation of the battery 14 caused by the high output load during takeoff. As a result, earlier charge start timing on the ground is set. Further, by allowing a part of the latent heat storage material 1711 to remain in solid form, the effect of suppressing supercooling can be increased.

### (Second Embodiment)

The present embodiment is a modification of a preceding embodiment as a basic configuration, and may incorporate description of the preceding embodiment. The preceding embodiment has a latent heat storage material as a heat storage material. Alternatively, a fluid heat storage material may be provided as a heat storage material along with a latent heat storage material.

FIG. 17 shows a cooling device 17 of the present embodiment. FIG. 17 corresponds to FIG. 2. FIG. 17 shows a relationship between the cooling device 17 and a battery 14. As shown in FIG. 17, the cooling device 17 includes a latent heat storage material (PCM) 1711 and fluid heat storage material (FHS) 1712 as a heat storage material 171. The fluid heat storage material 1712 is a fluid heat storage material, and is thermally connected to the latent heat storage material 1711.

The fluid heat storage material 1712 absorbs heat from the latent heat storage material 1711 using sensible heat. The fluid heat storage material 1712 may absorb heat from the battery 14. Any suitable fluid, such as gas, liquid, or the like can be used as the fluid heat storage material 1712. For example, water, cooling water with LLC added, refrigerant, oil, air or the like may be used. LLC is an abbreviation of long life coolant.

In order to repeatedly use the cooling device 17 with the latent heat storage material 1711 at high utilization, it is essential to improve the efficiency of regeneration of the latent heat storage material 1711 that has absorbed heat from a battery cell 142. Regeneration is a process of returning the latent heat storage material 1711, which has undergone a phase transition due to heat absorption, to its pre-phase transition state, e.g., from a liquid to a solid. Therefore, it is necessary to incorporate a regenerative function that actively absorbs heat from the latent heat storage material 1711 through thermal connection with the latent heat storage material 1711.

For regeneration of the latent heat storage material 1711, the latent heat storage material 1711 and the fluid heat storage material 1712 may be provided separately, as shown in FIG. 17. Sensible heat from the fluid heat storage material 1712 can be used to absorb heat from the latent heat storage material 1711 and to regenerate the latent heat storage material 1711. The fluid heat storage material 1712 assists heat absorption from the battery cell 142 by the latent heat storage material 1711 by regenerating the latent heat storage material 1711. The fluid heat storage material 1712 absorbs heat from the battery cells 142 directly or indirectly through the latent heat storage material 1711. The cooling device 17 performs hybrid cooling with the latent heat storage material 1711 and the fluid heat storage material 1712.

A configuration similar to that shown in the preceding embodiments (see FIGS. 6 to 9) may be used to separately provide the latent heat storage material 1711 and the fluid heat storage material 1712. For example, the latent heat storage material 1711 and the fluid heat storage material 1712 may be arranged at a position between side faces 1423 of the adjacent battery cells 142. The latent heat storage material 1711 and the fluid heat storage material 1712 may be arranged against a common side face 1423 or against the side faces 1423 that differ from each other.

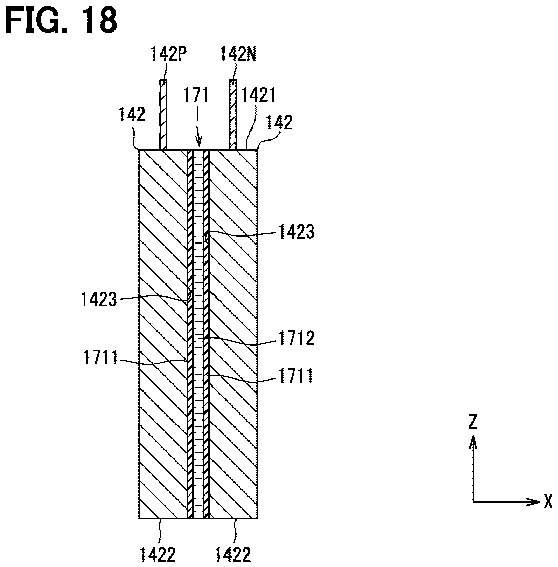

For example, as shown in FIG. 18, the latent heat storage material 1711 and the fluid heat storage material 1712 may be arranged at a position between the side faces 1423. The latent heat storage material 1711 is arranged on each of the side faces 1423 opposite to each other, and the fluid heat storage material 1712 is arranged at a position between the latent heat storage materials 1711. Each layer of the latent heat storage material 1711 may consist of only a latent heat storage material (PCM1) 1711A or only a latent heat storage material (PCM2) 1711B. Each layer may consist of both the latent heat storage materials 1711A and 1711B.

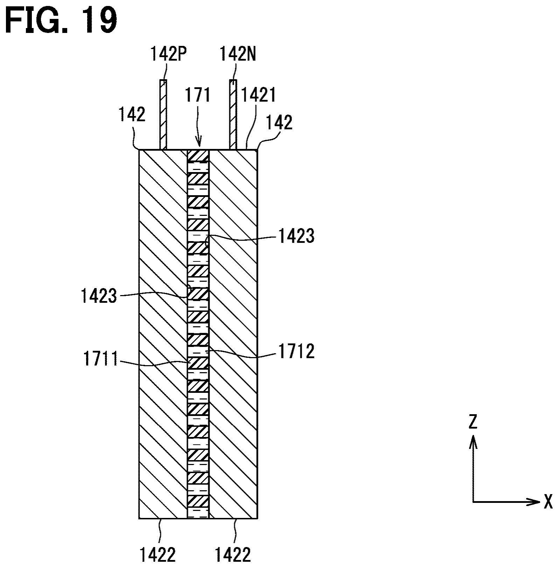

As shown in FIG. 19, the latent heat storage material 1711 and the fluid heat storage material 1712 may be alternated in the z-direction between the side faces 1423. The latent heat storage material 1711 may consist of only the latent heat storage material (PCM1) 1711A or only the latent heat storage material (PCM2) 1711B. The latent heat storage material 1711 may consist of both the latent heat storage materials 1711A and 1711B.

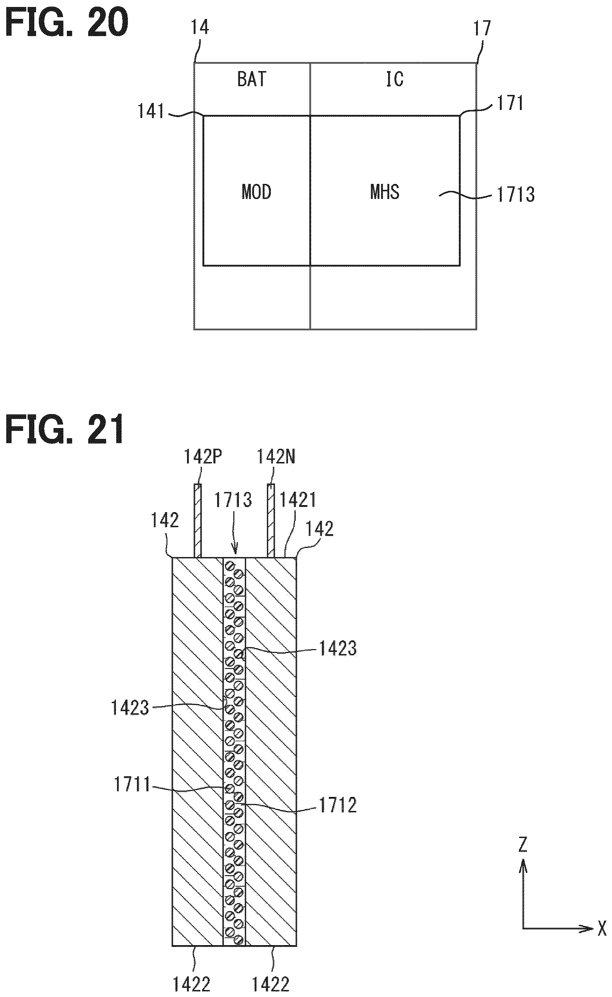

FIG. 20 shows another example of a cooling device 17. FIG. 20 corresponds to FIG. 17. For regeneration of the latent heat storage material 1711, a mixed heat storage material (MHS) 1713, which is a mixture of the latent heat storage material 1711 and the fluid heat storage material 1712, may be used, as shown in FIG. 20. The mixed heat storage material 1713 is a mixed heat storage material that has flowability by dispersing the latent heat storage material 1711 against the fluid heat storage material 1712. In case of the latent heat storage material 1711 that undergoes a phase transition from solid to liquid, the latent heat storage material 1711 filled in a capsule may be dispersion-mixed with the fluid heat storage material 1712, as shown in FIG. 21. In FIG. 21, the mixed heat storage material 1713 is arranged between the side faces 1423. In case of the latent heat storage material 1711 that undergoes a solid-to-solid phase transition, the latent heat storage material 1711 in powder form may be dispersion-mixed with the fluid heat storage material 1712.

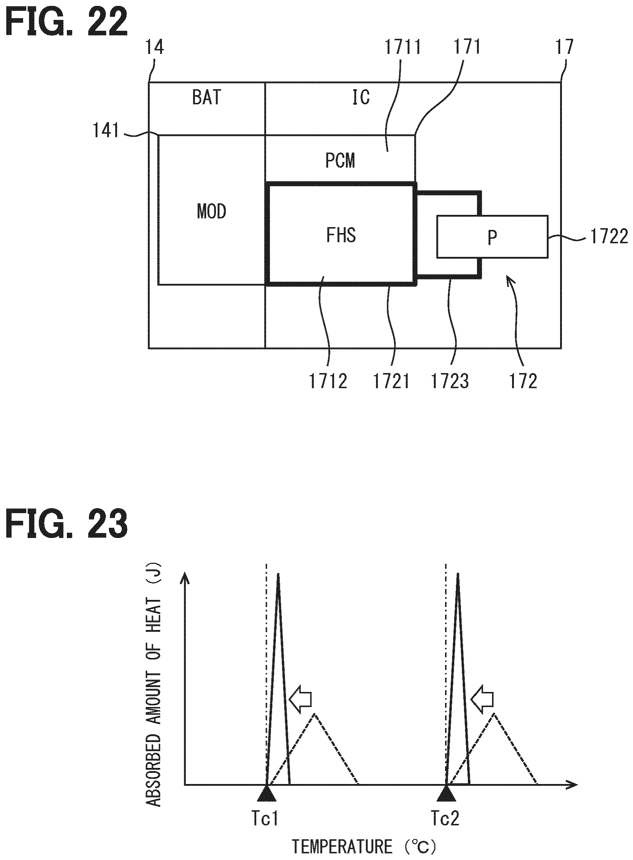

The fluid heat storage material 1712 and the mixed heat storage material 1713 may be sealed in a predetermined container. As shown in FIG. 22, the cooling device 17 may have a flow mechanism 172 and the flow mechanism 172 may flow the fluid heat storage material 1712 and/or the mixed heat storage material 1713. The fluid heat storage material 1712 and/or the mixed heat storage material 1713 are sometimes referred to as a flowable medium. The flow mechanism 172 has a cooler 1721, a pump (P) 1722, and a piping 1723. The cooler 1721 is filled with a flowable medium, and is thermally connected to the battery 14. As a cooler 1721, for example, a metal container with channels may be used, or a metal cooling plate with channels may be used. The pump 1722 controls the flow of the flowable medium. As a pump 1722, for example, a circulating pump may be used to circulate the flowable medium, or a reciprocating pump may be used to reciprocate the flowable medium. The piping 1723 connects the cooler 1721 and the pump 1722. The flowable medium also flows in the piping 1723. As an example, FIG. 21 shows a configuration that circulates a flowable medium.

The arrangement of the pump 1722 is not limited. It can be arranged inside the cooling device 17 or outside the cooling device 17. The pump may also serve as a pump for a different device than the cooling device 17. FIG. 22 shows an example of the fluid heat storage material 1712 as a flowable medium, but it is not limited to such configuration. The flow mechanism 172 may be applied to the configuration shown in FIG. 20. In other words, the mixed heat storage material 1713 may be made to flow by the flow mechanism 172. Other configurations are the same as those described in the preceding embodiment.

### <Summary of Second Embodiment>

According to the present embodiment, further to the effects described in the preceding embodiments, the following effects are achievable. Further to the latent heat storage material 1711, the heat storage material 171 of the present embodiment includes the fluid heat storage material 1712. The fluid heat storage material 1712 is thermally connected to the latent heat storage material 1711. Therefore, the sensible heat of the fluid heat storage material 1712 can be used to absorb heat from the latent heat storage material 1711 and regenerate the latent heat storage material 1711. Thus, the effect of heat absorption by latent heat can be enhanced. For example, a period of time to maintain the material near the phase transition temperature can be lengthened. For example, an amount of the latent heat storage material 1711 needed to maintain the temperature near the phase transition temperature is reducible. Further, the sensible heat of the fluid heat storage material 1712 is utilized to absorb the heat generated by the battery 14 during cruising that cannot be absorbed by latent heat. In other words, heat absorption during cruising is enhanced.

When the mixed heat storage material 1713 is used, the latent heat storage material 1711 flows together with the fluid heat storage material 1712. Thus, natural convection and forced flow can homogenize a heat storage state of multiple types of the heat storage materials 171, including the latent heat storage material 1711.

The cooling device 17 may have the flow mechanism 172 as described above. The flow mechanism 172 allows the flowable medium to flow during flight. Thus, when the flowable medium is the fluid heat storage material 1712, unevenness in the heat storage state of the fluid heat storage material 1712 can be eliminated, and the heat absorption capacity to absorb heat from the latent heat storage material 1711 or the battery 14 is used up without loss. When the flowable medium is the mixed heat storage material 1713, it is possible (a) to suppress uneven heat storage amount due to segregation of the latent heat storage material 1711 and (b) to homogenize the heat storage amount. Thus, the heat absorption capacity to absorb heat from the battery 14 can be used up without loss.

Further, the flowable medium in the piping 1723 functions as a thermal storage reserve, which can lower the highest rising temperature of the battery 14. The highest rising temperature can be lowered because heat dissipation of the flowable medium is accelerated in the piping 1723, heat dissipation properties of which is better than the battery interior. Note that the flow mechanism 172 may have a reservoir of the flowable medium separate from the piping 1723.

The configuration described in the present embodiment can be combined with any of the configurations shown in the preceding embodiment.

### (Third Embodiment)

The present embodiment is a modification of a preceding embodiment as a basic configuration, and may incorporate description of the preceding embodiment. In the preceding embodiment, the cooling device is equipped with a heat storage material. Alternatively, the cooling device may have a heat conduction assist member along with the heat storage material.

A latent heat storage material 1711 is remarkably effective in increasing the heat storage capacity. However, due to the low thermal conductivity, the sudden heat generation by a battery 14 cannot be absorbed with suitable pace, and unevenness of temperature may occur. Especially in the latent heat storage material 1711, which changes phases between solid and liquid, temperature unevenness may be caused. Therefore, in applications where heat needs to be quickly absorbed in a predetermined temperature range, such as during takeoff and landing, it is recommended to add a thermal conductivity assist function to the latent heat storage material 1711. In such manner, the endothermic response of the latent heat storage material 1711 is improved, allowing the large latent heat to be effectively utilized. The improved heat absorption response of the latent heat storage material 1711 allows it to quickly absorb heat during takeoff and landing. FIG. 23 shows a relationship between battery temperature and heat absorption. The broken line shows a case without the thermal conductivity assist function, and the solid line shows a case with the thermal conductivity assist function. As indicated by a white arrows, the heat absorption response of the latent heat storage material 1711 is enhanced by providing the thermal conductive assist function.

Further to the heat storage material 171, including the latent heat storage material 1711, the cooling device 17 is equipped with a heat conduction assist member. The heat conduction assist member is a better heat conductor than the heat storage material 171. Thermal conductivity of the heat conduction assist member is higher than that of the heat storage material 171. The heat conduction assist member is arranged in contact with the heat storage material 171. Metallic materials such as aluminum, for example, or carbon-based materials may be used as materials with excellent thermal conductivity. Ceramic materials such as alumina may also be used. The greater the contact area between the heat conduction assist member and the heat storage material 171, the higher the heat absorption response of the heat storage material 171, especially the latent heat storage material 1711. The heat conduction assist member can enhance the heat absorption response of the mixed heat storage material 1713, including the latent heat storage material 1711. The heat conduction assist member can increase the heat absorption response of the fluid heat storage material 1712, which has low thermal conductivity, such as water.

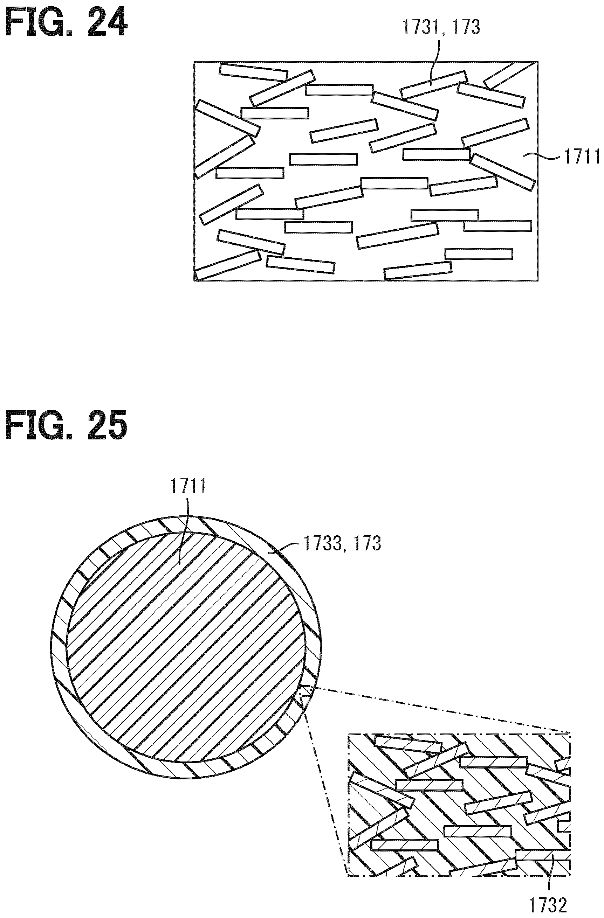

Various forms of heat conduction assist members are possible. For example, as shown in FIG. 24, a thermally conductive filler 1731 may be used as the heat conduction assist member 173, and the thermally conductive filler 1731 may be mixed and dispersed with the latent heat storage material 1711. The thermally conductive filler 1731 is, for example, a metallic or carbon-based filler. As shown in FIG. 25, a capsule 1733 containing particles 1732 with excellent thermal conductivity may be used as the heat conduction assist member 173. A resin wall of the capsule 1733 contains particles 1732. FIGS. 24 and 25 show examples of the heat conduction assist member.

Although not shown in the drawing, fins, ribs, beams, or the like may be provided inside the container (cooling member) that houses the heat storage material 171 to enhance thermal conductivity and serve as a heat conduction assist member. A matrix formed from a material with excellent thermal conductivity may be used as a heat conduction assist member, and latent heat storage material may be held within the matrix. The heat conduction assist member may be a combination of the above examples. Other configurations are similar to those shown in the preceding embodiments.

### <Overview of Third Embodiment>

According to the present embodiment, the cooling device 17 is provided with the heat conduction assist member 173, which is superior to the heat storage material 171 in thermal conductivity and is arranged in contact with the heat storage material 171. In such manner, a higher endothermic response is achievable even when the thermal conductivity of the heat storage material 171 is low. Thus, the large amount of heat generated during takeoff and landing can be quickly absorbed and with minimal temperature variation. In other words, the heat generated by the battery 14 during takeoff and landing can be absorbed, thereby increasing the effect of extending battery life. By providing the heat conduction assist member 173, multiple types of heat storage materials 171 can provide heat absorption performance without compromising thermal response, even when layered and/or mixed.

The thermally conductive filler 1731 may be used as the heat conduction assist member 173, and the thermally conductive filler 1731 may be configured to be dispersed and mixed with the heat storage material 171. Dispersion mixing at the material level can further increase the contact area between the heat storage material 171 and the thermally conductive filler 1731 (i.e., the heat conduction assist member 173). Thus, thermal response can be further enhanced. For example, the thermally conductive filler 1731 may be dispersed and mixed with the particles of the latent heat storage material 1711, which changes phase between solid phases, and molded. The thermally conductive filler 1731 may be dispersed and mixed with the latent heat storage material 1711, which changes phase between solid and liquid phases, and housed in a capsule.

The capsule 1733 may be used as the heat conduction assist member 173, and the latent heat storage material 1711 may be configured to be housed in the capsule 1733. Functional integration with the capsule 1733 can increase thermal response while preventing increase of the required volume.

The configuration described in the present embodiment can be combined with any of the configurations shown in the preceding embodiment.

### (Fourth Embodiment)

The present embodiment is a modification of a preceding embodiment as a basic configuration, and may incorporate description of the preceding embodiment. In the preceding embodiment, the latent heat storage material is arranged for the respective battery cells. In addition, the latent heat storage amount per heat absorption area size may be configured to be different position to position.

As described above, the temperature of the battery 14 rises steeply when performing takeoff and landing. The temperature of a battery 14 will differ in one battery cell 142 and in the other. The difference occurs within a battery module 141, which is a battery assembly. That is, a high output load causes a temperature distribution or unevenness in the battery 14. In the present system, the battery module is arranged with a difference in the latent heat storage amount per heat absorption area size for each battery module 141 so as to eliminate the temperature difference occurring within the battery module 141 as a result of performing takeoff and landing. The amount of the latent heat stored per heat absorption area size may be adjusted by the amount of a latent heat storage material 1711 or by the type of the latent heat storage material 1711. The adjustment may be made by both of the amount and type of the latent heat storage material 1711.

As described above, the high output load of flight during takeoff and landing causes electric current to concentrate near the electrode terminals 142P and 142N of the battery cells 142. In other words, the area around the electrode terminals 142P, 142N tends to have high temperature. Therefore, the latent heat storage material 1711 may be arranged so that the amount of the latent heat storage material 1711 at a first position on the side face 1423 of the battery cell 142 is greater than the amount of the latent heat storage material 1711 at a second position, which is further away from the electrode terminals 142P, 142N than the first position.

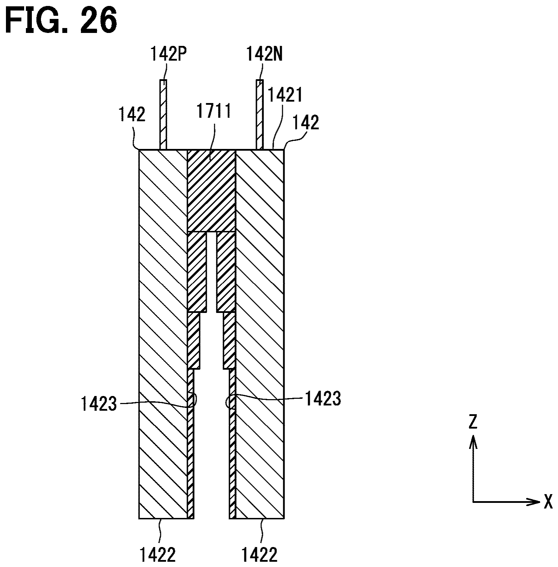

For example, as shown in FIG. 26, the volume of the latent heat storage material 1711 arranged at a position between the side faces 1423 of the adjacent battery cells 142 may be made different depending on a distance from the electrode terminals 142P, 142N in the Z direction. In FIG. 26, the volume of the latent heat storage material 1711 is set at four steps (four levels) with a constant filling rate, and the closer to the electrode terminals 142P, 142N is, the greater the volume of the latent heat storage material 1711 is made. The closer to the end face 1421, the greater the volume of the latent heat storage material 1711, and the closer to the end face 1422, the smaller the volume of the latent heat storage material 1711.

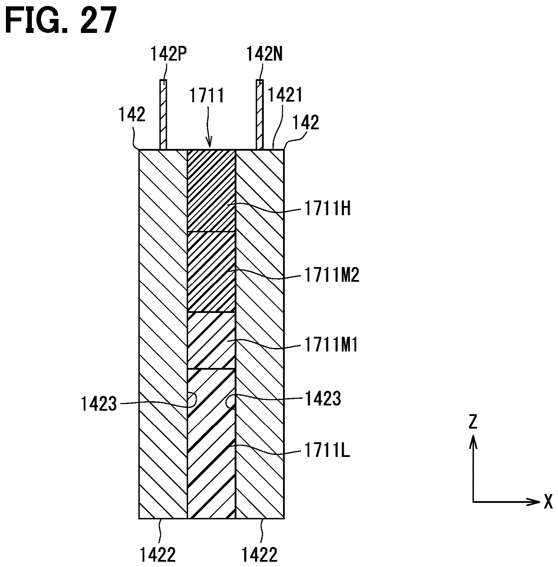

As shown in FIG. 27, the filling rate of the latent heat storage material 1711 arranged at a position between the side faces 1423 may be varied according to the distance from the electrode terminals 142P, 142N in the Z direction. In FIG. 26, the filling rate of latent heat storage material 1711 is set at four levels per a certain constant volume, regarding which the closer to the electrode terminals 142P, 142N is, the higher the filling rate of latent heat storage material 1711 becomes. The filling rate is highest for a latent heat storage material 1711H, satisfying a following relationship: the latent heat storage material 1711H > a latent heat storage material 1711M2 > a latent heat storage material 1711M1 > a latent heat storage material 1711L. The closer to the end face 1421, the higher the filling rate of the latent heat storage material 1711, and the closer to the end face 1422, the lower the filling rate of the latent heat storage material 1711.

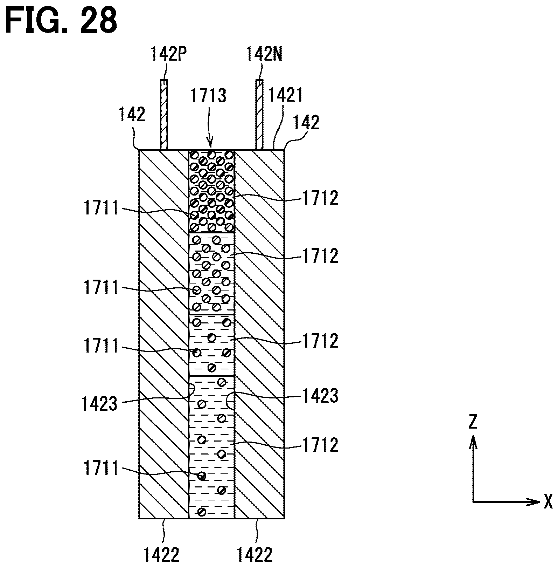

As shown in FIG. 28, in the mixed heat storage material 1713 containing the latent heat storage material 1711 filled in a capsule, the filling rate of the latent heat storage material 1711 may be varied according to the distance from the electrode terminals 142P, 142N in the Z direction. In FIG. 28, the filling rate of the latent heat storage material 1711 in the fluid heat storage material 1712 is set at four levels, regarding which the closer to the electrode terminals 142P, 142N, the higher the filling rate of the latent heat storage material 1711. The closer to the electrode terminals 142P, 142N, the more capsules are contained per unit volume. The closer to the end face 1421, the higher the filling rate of the latent heat storage material 1711, and the closer to the end face 1422, the lower the filling rate of the latent heat storage material 1711. As shown in FIG. 28, in a container holding the fluid heat storage material 1712, the space for the fluid heat storage material 1712 may be divided into four sections.

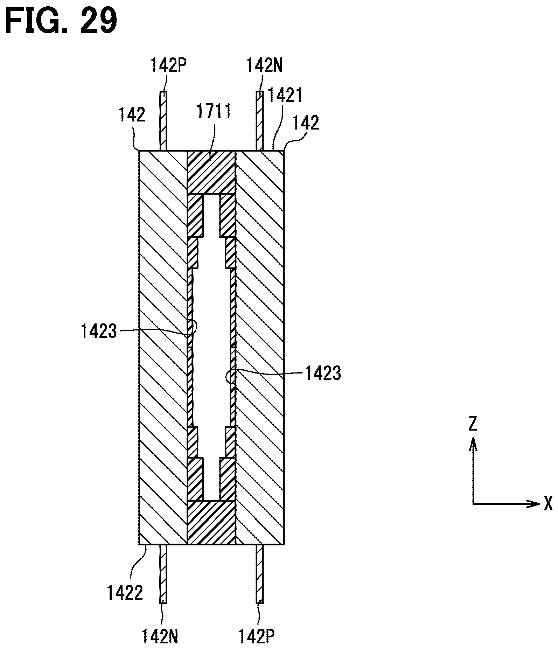

FIGS. 26 through 28 have shown an example with the electrode terminals 142P, 142N put on an end face 1421 side. The same configuration may also be used in a configuration with the electrode terminals 142P, 142N put on each of the end faces 1421, 1422. For example, as shown in FIG. 29, the volume of the latent heat storage material 1711 may be varied according to the distance from the electrode terminals 142P, 142N in the Z direction. In FIG. 29, the volume of the latent heat storage material 1711 is set at four levels as in FIG. 26, with the latent heat storage material 1711 being constant. The closer to the electrode terminals 142P, 142N, the greater the volume of the latent heat storage material 1711. The closer to the end faces 1421, 1422, the greater the volume of the latent heat storage material 1711, and the closer to the center position of the latent heat storage material 1711 in the Z direction, the smaller the volume of the latent heat storage material 1711.

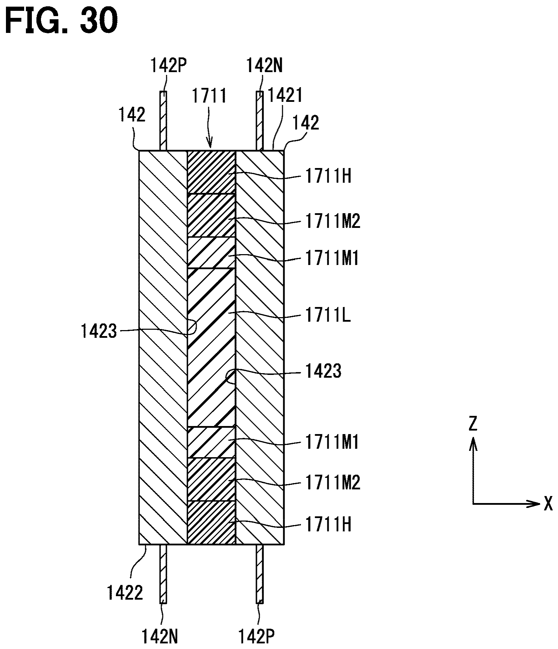

As shown in FIG. 30, the filling rate of the latent heat storage material 1711 may be varied according to the distance from the electrode terminals 142P, 142N in the Z direction. In FIG. 30, the filling rate of the latent heat storage material 1711 is set at four levels as in FIG. 27, keeping the volume constant. The closer to the electrode terminals 142P, 142N, the higher the filling rate of the latent heat storage material 1711. The closer to the end faces 1421, 1422, the higher the filling rate of the latent heat storage material 1711, and the closer to the center position of latent heat storage material 1711 in the Z direction, the lower the filling rate of the latent heat storage material 1711.

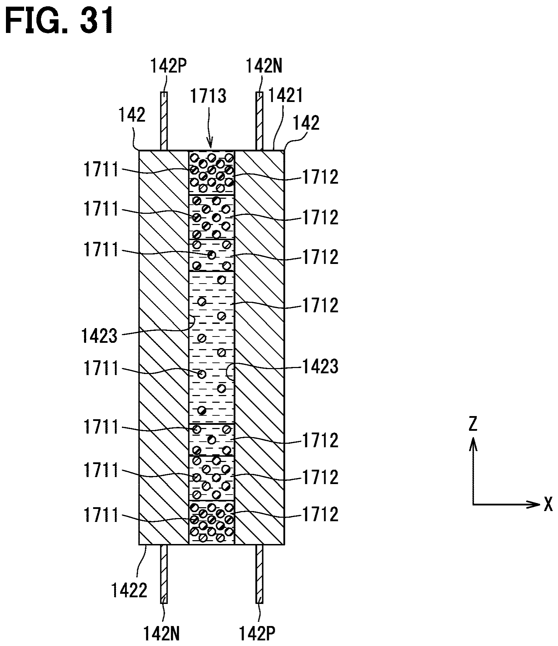

As shown in FIG. 31, in the mixed heat storage material 1713 containing the latent heat storage material 1711 filled in a capsule, the filling rate of the latent heat storage material 1711 may be varied according to the distance from the electrode terminals 142P, 142N in the Z direction. In FIG. 31, the filling rate of the latent heat storage material 1711 in the fluid heat storage material 1712 is set at four levels as in FIG. 28. The closer to the electrode terminals 142P, 142N, the higher the filling rate of the latent heat storage material 1711. The closer to the end faces 1421, 1422, the higher the filling rate of the latent heat storage material 1711, and the closer to the center position of latent heat storage material 1711 in the Z direction, the lower the filling rate of the latent heat storage material 1711.

FIGS. 26 through 31 respectively correspond to FIG. 4. Thought an example of varying the volume and filling rate of the latent heat storage material 1711 at four different levels has been shown, the configuration is not limited to the above. Levels may also be other range, i.e., may be 2 or 3 levels, or 5 or more levels. The volume and filling rate may vary continuously with the distance from the electrode terminals 142P, 142N. In the examples shown in FIGS. 26, 27, 30, and 31, the fluid heat storage material 1712 may be arranged as shown in the preceding embodiments. The fluid heat storage material 1712 may be arranged in an open space between the side faces 1423 or on the other side faces 1423. The latent heat storage material 1711 may be divided into two layers, with the fluid heat storage material 1712 put in between. FIGS. 26 through 31 show an example of the latent heat storage material 1711 arranged at a position between the side faces 1423 of the adjacent battery cells 142, but the volume and filling rate may be adjusted in the same way on the side faces 1423 that are not facing the other side faces 1423.

In the battery module 141 composed of multiple battery cells 142, heat dissipation proceeds from an outer periphery of an arrangement area where the multiple battery cells 142 are arranged. Therefore, the high output load of flight during takeoff and landing tends to cause the high temperature near the center of the arrangement area of the multiple battery cells 142. Therefore, in the arrangement area of the multiple battery cells 142 in the battery module 141, the latent heat storage material 1711 may be arranged so that the amount of the latent heat storage material 1711 arranged at a first position is greater than the amount of the latent heat storage material 1711 arranged at a second position, which is farther away from the center of the arrangement area than the first position. The center of the arrangement area is, for example, the center of the stacking direction in a stacked arrangement of the multiple battery cells 142, and is, in another example, the center position of the multiple battery cells 142 in a plan view in a staggered arrangement of the multiple battery cells 142.

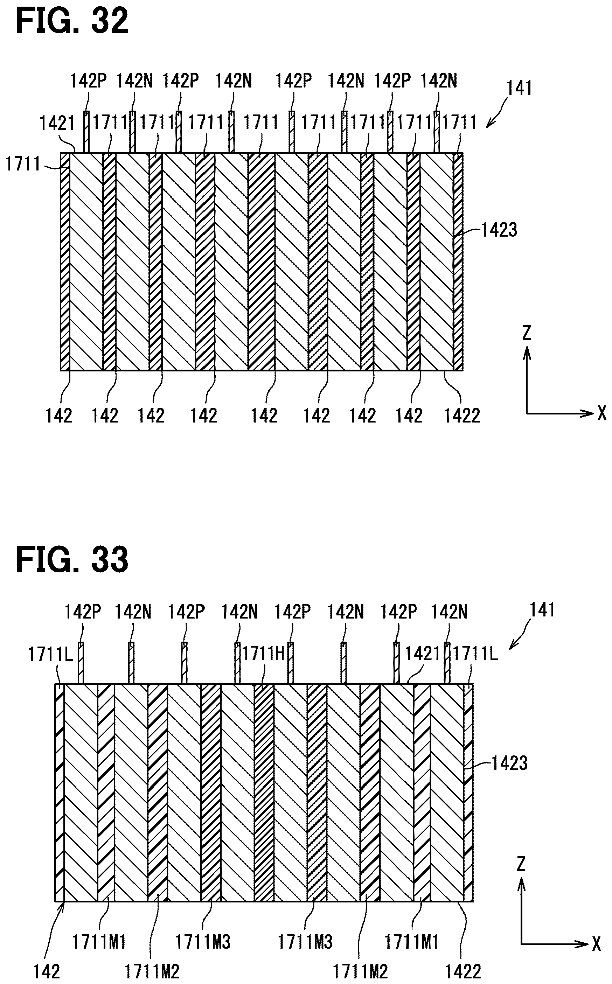

For example, as shown in FIG. 32, in a battery module 141 with a stacked body of alternating the latent heat storage material 1711 and the battery cell 142, the volume of the latent heat storage material 1711 may be varied according to the distance from the center in the stacking direction. In FIG. 32, the volume of the latent heat storage material 1711 is set at four steps (four levels) with a constant filling rate, and the closer to the center of the multiple battery cells 142 in the stacking direction, the greater the volume of the latent heat storage material 1711.

As shown in FIG. 33, in a battery module 141 with the stacked body of alternating the latent heat storage material 1711 and battery cell 142, the filling rate of the latent heat storage material 1711 may be varied according to the distance from the center in the stacking direction. In FIG. 33, the filling rate of the latent heat storage material 1711 is set at five steps (five levels) with the volume kept constant, and the closer to the center of the multiple battery cells 142 in the stacking direction, the higher the filling rate of the latent heat storage material 1711. The filling rate is highest for the latent heat storage material 1711H, satisfying a following relationship: the latent heat storage material 1711H > a latent heat storage material 1711M3 > a latent heat storage material 1711M2 > a latent heat storage material 1711M1 > a latent heat storage material 1711L.

The volume of the latent heat storage material 1711 and the number of levels of the filling rate are not limited to the examples shown in FIGS. 32 and 33. The volume or filling rate may vary continuously with the distance from the center. In the examples shown in FIGS. 32 and 33, the fluid heat storage material 1712 may be arranged as shown in the preceding embodiment.

### <Summary of Fourth Embodiment>

According to the present embodiment, the latent heat storage material 1711 is arranged on the battery module 141 with a difference in the latent heat storage amount per heat absorption area size with respect to the battery module 141 so as to eliminate the temperature difference that occurs within the battery module 141 (i.e., within the battery assembly). In such manner, temperature distribution within the battery cell 142 and the battery module 141, which is caused by the high output load of flight during takeoff and landing, is homogenized. Thus, local over-heat is prevented, and acceleration of battery deterioration is suppressible.

Differences in the amount of the latent heat storage material, e.g., in volume or filling rate, may be made for providing differences in the latent heat storage amount per heat absorption area size. By changing the type of the latent heat storage material 1711, a difference in the latent heat storage amount per heat absorption area size may be established.

The amount of the latent heat storage material 1711 arranged on the side face 1423 of the battery cell 142 may be made greater at the first position of the side face 1423 than at the second position, which is further away from the electrode terminals 142P, 142N than the first position. By increasing the latent heat storage amount on the side face of the battery cell 142 near the electrode terminals 142P, 142N, which are prone to localized temperature increases due to high output load of flight during takeoff and landing, the temperature distribution can be made more homogenized.

In the arrangement area of the multiple battery cells 142 in the battery module 141, the amount of the latent heat storage material 1711 arranged at the first position may be made greater than the amount of the latent heat storage material 1711 arranged at the second position, which is farther away from the center of the arrangement area than the first position. By increasing the latent heat storage amount near the center of the arrangement area of the battery cells 142, which is prone to localized temperature increases due to high output load of flight during takeoff and landing, the temperature distribution can be made more homogenized.

The configuration described in the present embodiment can be combined with any of the configurations shown in the preceding embodiment.

### (Fifth Embodiment)

The present embodiment is a modification of a preceding embodiment as a basic configuration, and may incorporate description of the preceding embodiment. The preceding embodiment shows a configuration in which the battery is cooled by an on-board cooling device. In addition to the above, cooling may be performed by an off-board cooling device.

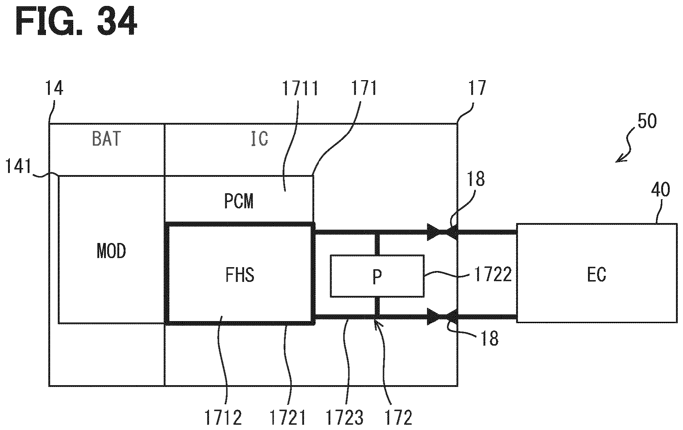

FIG. 34 shows a cooling device 17 and a cooling system 50 of the present embodiment. FIG. 34 corresponds to FIG. 22. As shown in FIG. 34, the cooling device 17 includes, as a flowable medium, a fluid heat storage material 1712, and a joint 18 for connection to an off-board cooling device (EC) 40 on the ground. In the following, the cooling device 17 may be referred to as an on-board cooling device. The joint 18 connects a flow mechanism 172 of the on-board cooling device 17 to the off-board cooling device 40. The pipes of the cooling device 17 and the off-board cooling device 40 are connected to each other through the joint 18. The joint 18 may be separate from the cooling device 17. The joint 18 may be integrated with the airframe.

The off-board cooling device 40 is equipped with a heat exchanger, a pump, piping, and the like, which are not shown. The off-board cooling device 40 is connected to the joint 18 on the ground. The off-board cooling device 40 flows the fluid heat storage material 1712 through the joint 18. The off-board cooling device 40 may circulate, for example, the fluid heat storage material 1712. The heat exchange in the off-board cooling device 40 returns the cooled fluid heat storage material 1712 back into an inside of the flying object, and also cools the latent heat storage material 1711 and the battery 14. The cooling system 50 includes the on-board cooling device 17 in the flying object, i.e., in the eVTOL 10, and the off-board cooling device 40. The cooling system 50, which cools the battery 14, has some of its functions in the flying object, and has the other functions outside the flying object.

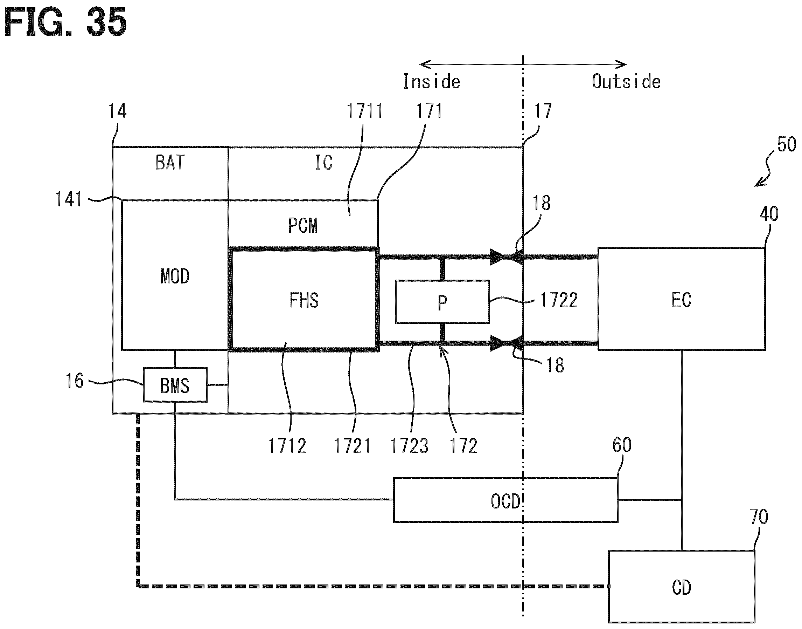

FIG. 35 shows the cooling system and its relationship to other devices. The BMS 16 obtains information on the battery cells 142 from the battery module 141. As shown in FIG. 35, the BMS 16 may have a function to monitor and control the cooling device 17 (i.e., the flow mechanism 172). Functions for monitoring the cooling device 17 and controlling the cooling device 17 (i.e., the flow mechanism 172) may be provided separately from the BMS 16.

The operation control device (OCD) 60 is communicatively connected to the BMS 16, the off-board cooling device 40, and a charging device (CD) 70. Some of the functions of the operation control device 60 may be provided on board in the flying object, while the other functions may be provided outside the flying object. As described above, the functions of the operation control device 60 may be provided only on board in the flying object, or the functions may be provided only outside the flying object. Functions regarding the monitoring and control of the BMS 16, the operation control device 60, and the cooling device 17 may be appropriately shared. The off-board cooling device 40 and the charging device 70 may be installed separately or integrated as shown in FIG. 35. The off-board cooling device 40 may cool the fluid heat storage material 1712, the latent heat storage material 1711, and the battery 14 at a timing of charging of the battery 14 by the charging device 70. A broken line shown in FIG. 35 indicates a power line.

FIGS. 34 and 35 show an example of the fluid heat storage material 1712 as a flowable medium, but the configuration is not limited to the above. The mixed heat storage material 1713 may be applied to the cooling device 17 and the cooling system 50 having the joint 18.

### <Summary of Fifth Embodiment>

According to the present embodiment, the cooling device 17 is equipped with the joint 18 for connecting the flowable medium to the off-board cooling device 40 on the ground. Further, the cooling device 17, together with the off-board cooling device 40, builds the cooling system 50. The off-board cooling device 40 cools the heat storage material 171 and the battery 14 by flowing the flowable medium. In such manner, the battery temperature and the heat storage state of the latent heat storage material 1711 are adjusted to a state where the next flight is performable. Forced cooling by the off-board cooling device 40 can absorb heat from the battery cells 142 and the latent heat storage material 1711 in a short time.

### (Modifications)

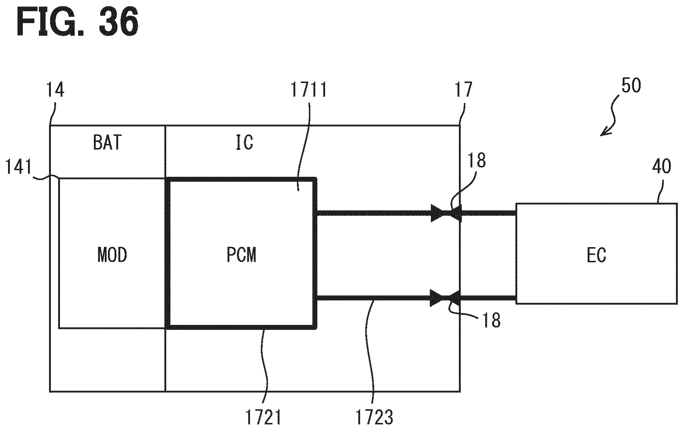

Thought an example of connecting the off-board cooling device 40 to the cooling device 17, which includes the fluid heat storage material 1712 as the heat storage material 171 has been shown, the configuration is not limited to the above-described example. For example, as shown in FIG. 36, the system may be connected to a cooling device 17 that includes only the latent heat storage material 1711 as the heat storage material 171. The cooling device 17 has, for example, a cooler 1721 and piping 1723 connecting the cooler 1721 to the joint 18. The off-board cooling device 40 cools the latent heat storage material 1711 and the battery 14 by flowing the fluid heat storage material 1712 through the joint 18, the piping 1723 in the flying object, and the cooler 1721.

Although not shown in the drawing, the off-board cooling device 40 may be connected to a cooling device 17 that includes the fluid heat storage material 1712 but does not include a pump 1722 to flow the fluid heat storage material 1712.

The configuration described in the present embodiment can be combined with any of the configurations shown in the preceding embodiment.

### (Other Embodiments)

The present disclosure in the specification and drawings is not limited to the exemplified embodiments. The present disclosure includes embodiments described above and modifications of the above-described embodiments made by a person skilled in the art. For example, the present disclosure is not limited to a combination of the components and/or elements described in the embodiments. The present disclosure may be implemented in various combinations. The present disclosure may have additional components that can be added to the embodiments. The present disclosure also includes modifications which include partial components/elements of the above-described embodiments. The present disclosure includes replacements of components and/or elements between one embodiment and another embodiment, or combinations of components and/or elements between one embodiment and another embodiment The technical scope disclosed in the present disclosure is not limited to the above-described embodiments. It should be understood that a part of the disclosed technical scopes are indicated by claims, and the present disclosure further includes modifications within an equivalent scope of the claims.

The present disclosure in the specification, drawings and the like is not limited by the description of the claims. The present disclosure in the specification, drawings, and the like include the technical ideas described in the claims, and further extend to a wider variety of technical ideas than those described in the claims. Therefore, various technical ideas can be extracted from the present disclosure of the specification, the drawings and the like without being limited to the description of the claims.

When it is mentioned that a certain element or layer is "on", "coupled", "connected", or "bonded", the certain element or layer may be directly on, coupled, connected, or bonded to another element or layer, or an interposed element or an interposed layer may be present. In contrast, when it is mentioned that a certain element is "directly on", "directly coupled", "directly connected", or "directly bonded" to another element or layer, no interposed element or interposed layer is present. Other words used to describe a relationship between elements should be interpreted in the similar manner (for example, "between" and "directly between", "adjacent to" and "directly adjacent to"). When used in the description, the term "and/or" includes any of and all combinations related to one or multiple associated listed items.

The various flowcharts shown in the present disclosure are examples, and the number of processes constituting the flowcharts and the execution order of the processes can be changed as appropriate. The devices, systems, and methods described in the present disclosure may also be realized by a dedicated computer comprising a processor programmed to perform one or more functions embodied by a computer program. The device and the method described in the present disclosure may also be realized by a dedicated hardware logic circuit. Further, the devices and methods described in the present disclosure may be realized by one or more dedicated computers configured with a combination of a processor executing a computer program and one or more hardware logic circuits.

For example, a part or all of the functions of the processor 201 may be realized as hardware. An aspect in which a certain function is realized as hardware includes an aspect in which one or multiple ICs are used. As the processor (arithmetic core), a CPU, an MPU, a GPU, a DFP, or the like can be adopted. The CPU is an abbreviation of a central processing unit. MPU is an abbreviation of Micro-Processing Unit. GPU is an abbreviation of Graphics Processing Unit. DFP is an abbreviation of Data Flow Processor.

A part or all of the functions of the processor 201 may be realized by combining multiple types of arithmetic processing devices. Some or all of the functions provided by the processor 201 may be realized by using SoC, ASIC, FPGA, and the like. SoC is an abbreviation of a system on chip. ASIC is an abbreviation of an application specific integrated circuit. FPGA is an abbreviation of a field programmable gate array. The same applies to the processor 311.

The computer program described above may be stored in a computer-readable, non-transitory tangible storage medium as instructions to be executed by a computer. As the program storage medium, an HDD, an SSD, a flash memory, or the like can be adopted. HDD is an abbreviation of a hard disk drive. SSD is an abbreviation of a solid state drive. Programs for causing a computer to function as a control device or control system, in the form of a non-transitory tangible storage medium such as a semiconductor memory in which the programs are recorded, are also included in the scope of the present disclosure.

### (Disclosure of Technical Ideas)

The present disclosure provides multiple technical ideas described in the following items. Some items may be described in a multiple dependent form with subsequent items referring to the preceding item in an alternative form. Some items may be described in a multiple dependent form referring to another multiple dependent form. These items described in the multiple dependent form define multiple technical ideas.

### <Technical Idea 1>

A cooling device mounted on an electric flying object (10) to cool a battery (14) of the electric flying object includes a heat storage material (171) made of one or more types to absorb heat from the battery. The heat storage material includes, as a latent heat storage material (1711), a first latent heat storage material (1711A) in which a phase transition temperature is set to absorb heat generated by the battery associated with takeoff from among (i) the heat generated by the battery associated with takeoff and (ii) heat generated by the battery associated with landing, and/or a second latent heat storage material (1711B) in which a phase transition temperature is set to absorb the heat generated by the battery associated with landing.

### <Technical Idea 2>

In the cooling device according to technical idea 1, the heat storage material includes a fluid heat storage material (1712) that is a fluid and thermally connected to the latent heat storage material.

### <Technical Idea 3>

The cooling device according to technical idea 2 includes a mechanism (172) provided on board in the electric flying object to flow a flowable medium, and the flowable medium is the fluid heat storage material and/or a mixed heat storage material that is a mixture of the latent heat storage material and the fluid heat storage material. In addition, the mechanism includes a cooler (1721) filled with the flowable medium and thermally connected to the battery, a pump (1722) configured to control a flow of the flowable medium, and a piping (1723) connecting the cooler and the pump.

### <Technical Idea 4>

The cooling device according to technical idea 2 or 3, further includes a joint (18) connecting the fluid heat storage material and/or the flowable medium which is a mixed heat storage material made by mixing the latent heat storage material and the fluid heat storage material, to an off-board cooling device on a ground.

### <Technical Idea 5>

The cooling device according to any one of technical ideas 1 to 4, further includes a heat conduction assist member (173) that has a thermal conductivity higher than that of the heat storage material, and is arranged in contact with the heat storage material.

### <Technical Idea 6>

In the cooling device according to technical idea 5, the heat storage material and the heat conduction assist member are dispersion mixed.

### <Technical Idea 7>

In the cooling device according to technical idea 5, the heat conduction assist member is a capsule, and the latent heat storage material is housed in the capsule.

### <Technical Idea 8>

In the cooling device according to any one of technical ideas 1 to 7, the heat storage material is set to have a total heat storage amount for absorbing heat from the battery, based on the heat storage amount at a start of flight, an output load during flight and heat dissipation characteristics of the battery, so that a battery temperature during flight is equal to or lower than an upper limit temperature for operation.

### <Technical Idea 9>

In the cooling device according to technical idea 8, an amount of the latent heat storage material is set such that a phase change of the latent heat storage material is complete by absorption of the heat generated by the battery associated with the output load during flight.

### <Technical Idea 10>

In the cooling device according to technical idea 8, an amount of the latent heat storage material is set, such that an uncompleted portion of a phase change remains in the latent heat storage material by absorption of the heat generated by the battery, associated with the output load during flight.

### <Technical Idea 11>

In the cooling device according to any one of technical ideas 1 to 10, the battery includes a battery assembly (141) provided with multiple battery cells (142), and the latent heat storage material is arranged with a difference in the latent heat storage amount per heat absorption area size with respect to the battery assembly, to eliminate a temperature difference generated within the battery assembly.

### <Technical Idea 12>

In the cooling device according to technical idea 11, the latent heat storage material is arranged on a side face of the battery cell, the battery cell has electrode terminals (142P, 142N) provided on a face different from the side face, and an amount of the latent heat storage material at a first position of the side face is greater than an amount of latent heat storage material at a second position, which is away from the electrode terminals more than the first position.

### <Technical Idea 13>

In the cooling device according to technical idea 11, in an arrangement area of the multiple battery cells in the battery assembly, an amount of the latent heat storage material arranged at a first position is greater than an amount of the latent heat storage material arranged at a second position, which is away from a center of the arrangement area more than the first position.

## Claims

1. A cooling device mounted on an electric flying object (10) to cool a battery (14) of the electric flying object, the cooling device comprising:
a heat storage material (171) made of one or more types, to absorb heat from the battery, wherein
the heat storage material includes, as a latent heat storage material (1711), a first latent heat storage material (1711A) in which a phase transition temperature is set to absorb heat generated by the battery associated with takeoff from among (i) the heat generated by the battery associated with takeoff and (ii) heat generated by the battery associated with landing, and/or a second latent heat storage material (1711B) in which a phase transition temperature is set to absorb the heat generated by the battery associated with landing.

2. The cooling device of claim 1, wherein
the heat storage material includes a fluid heat storage material (1712) that is a fluid and thermally connected to the latent heat storage material.

3. The cooling device of claim 1 or 2, further comprising:
a heat conduction assist member (173) that has a thermal conductivity higher than that of the heat storage material, and is arranged in contact with the heat storage material.

4. The cooling device of claim 3, wherein
the heat conduction assist member is a heat-conductive filler (1731), and
the heat storage material and the heat conductive filler are dispersion mixed.

5. The cooling device of claim 3, wherein
the heat conduction assist member is a capsule (1733), and
the latent heat storage material is housed in the capsule.

6. The cooling device of claim 1 or 2, wherein
the heat storage material is set
to have a total heat storage amount for absorbing heat from the battery, based on the heat storage amount at a start of flight, an output load during flight and heat dissipation characteristics of the battery, and
to have a battery temperature during flight equal to or lower than an upper limit temperature for operation.

7. The cooling device of claim 6, wherein
an amount of the latent heat storage material is set such that a phase change of the latent heat storage material is complete by absorption of the heat generated by the battery associated with the output load during flight.

8. The cooling device of claim 6, wherein
an amount of the latent heat storage material is set, such that an uncompleted portion of a phase change remains in the latent heat storage material by absorption of the heat generated by the battery, associated with the output load during flight.

9. The cooling device of claim 1 or 2, wherein
the battery includes a battery assembly (141) provided with multiple battery cells (142), and
the latent heat storage material is arranged with a difference in the latent heat storage amount per heat absorption area size with respect to the battery assembly, to eliminate a temperature difference generated within the battery assembly.

10. The cooling device of claim 9, wherein
the latent heat storage material is arranged on a side face of the battery cell,
the battery cell has electrode terminals (142P, 142N) provided on a face different from the side face, and
an amount of the latent heat storage material at a first position of the side face is greater than an amount of latent heat storage material at a second position, which is away from the electrode terminals more than the first position.

11. The cooling device of claim 9, wherein
in an arrangement area of the multiple battery cells in the battery assembly, an amount of the latent heat storage material arranged at a first position is greater than an amount of the latent heat storage material arranged at a second position, which is away from a center of the arrangement area more than the first position.

12. The cooling device of claim 2, further comprising:
a mechanism (172) provided on board in the electric flying object to flow a flowable medium, the flowable medium being the fluid heat storage material and/or a mixed heat storage material that is a mixture of the latent heat storage material and the fluid heat storage material, wherein
the mechanism includes a cooler (1721) filled with the flowable medium and thermally connected to the battery, a pump (1722) configured to control a flow of the flowable medium, and a piping (1723) connecting the cooler and the pump.

13. The cooling device of claim 2 or claim 12, further comprising:
a joint (18) configured to connect the fluid heat storage material and/or the flowable medium which is a mixed heat storage material made of the latent heat storage material and the fluid heat storage material, to an off-board cooling device on a ground.

14. A cooling system comprising:
an on-board cooling device (17) mounted in an electric flying object (10) to cool a battery (14) of the electric flying object by a heat storage material (171) of one or more types; and
an off-board cooling device (40) configured to cool the battery on the ground, wherein
the heat storage material includes, as a latent heat storage material (1711), a first latent heat storage material (1711A) in which a phase transition temperature is set to absorb heat generated by the battery associated with takeoff from among (i) the heat generated by the battery associated with takeoff and (ii) heat generated by the battery during landing, and/or a second latent heat storage material (1711B) in which a phase transition temperature is set to absorb the heat generated by the battery during landing, and
the off-board cooling device cools the heat storage material and the battery by flowing a flowable medium.
